# EUROPÄISCHE PATENTSCHRIFT

(11) **EP 3 857 207 B1**
(45) Veröffentlichungstag und Bekanntmachung des Hinweises auf die Patenterteilung: **25.10.2023**
(21) Anmeldenummer: 19786471.3
(22) Anmeldetag: 26.09.2019
(51) Int. Cl.: G01N 21/53, G08B 17/107

(54) **STREULICHTRAUCHMELDER MIT EINER ZWEIFARBEN-LED, EINEM PHOTOSENSOR UND EINEM DEM PHOTOSENSOR VORGESCHALTETEN ODER DER ZWEIFARBEN-LED NACHGESCHALTETEN WELLENLÄNGENSELEKTIVEN POLARISATOR SOWIE GEEIGNETE VERWENDUNG EINES SOLCHEN POLARISATORS**
SCATTERED LIGHT SMOKE DETECTOR HAVING A TWO-COLOR LED, A PHOTOSENSOR, AND A WAVELENGTH-SELECTIVE POLARIZER CONNECTED UPSTREAM OF THE PHOTOSENSOR OR CONNECTED DOWNSTREAM OF THE TWO-COLOR LED, AND SUITABLE USE OF SUCH A POLARIZER
DÉTECTEUR DE FUMÉE À LUMIÈRE DIFFUSÉE COMPORTANT UNE LED BICOLORE, UN PHOTOCAPTEUR ET UN POLARISEUR SÉLECTIF EN LONGUEUR D'ONDE, CONNECTÉ EN AMONT DU PHOTOCAPTEUR OU EN AVAL DE LA LED BICOLORE, ET UTILISATION APPROPRIÉE D'UN TEL POLARISEUR

(30) Priorität: 28.09.2018 EP 18197690
(43) Veröffentlichungstag der Anmeldung: 04.08.2021
(73) Patentinhaber: Siemens Schweiz AG, 8047 Zürich (CH)
(72) Erfinder: BACHELS, Thomas, 5636 Benzenschwil (CH); STÄGER, Mathias, 6313 Menzingen (CH)
(74) Vertreter: Siemens Patent Attorneys
(86) Internationale Anmeldenummer: PCT/EP2019/076041
(87) Internationale Veröffentlichungsnummer: WO 2020/064935

(56) Entgegenhaltungen:
- EP-A1- 1 887 536
- EP-A1- 2 676 596
- WO-A1-2005/043479
- DE-A1-102013 219 181
- DE-A1-102015 117 361

## Beschreibung

Streulichtrauchmelder mit einer Zweifarben-LED, einem Photosensor und einem dem Photosensor vorgeschalteten oder der Zweifarben-LED nachgeschalteten wellenlängenselektiven Polarisator sowie geeignete Verwendung eines solchen Polarisators

Die Erfindung betrifft einen Streulichtrauchmelder, der eine Zweifarben-LED zum Aussenden von Licht einer ersten und einer zweiten Wellenlänge λ₁, λ₂, einen spektral darauf abgestimmten Photosensor sowie eine Steuereinheit aufweist. Die Zweifarben-LED und der Photosensor bilden dabei eine sogenannte Streulichtanordnung als Teil des erfindungsgemässen Streulichtrauchmelders. Vorzugsweise ist die Zweifarben-LED dazu ausgebildet, ausschliesslich monochromes Licht der ersten und zweiten Wellenlänge λ₁, λ₂ auszusenden. Die Steuereinheit ist signaltechnisch mit der Zweifarben-LED und mit dem Photosensor verbunden und dazu eingerichtet, die Zweifarben-LED zum Aussenden von Licht der ersten und/oder zweiten Wellenlänge λ₁, λ₂ anzusteuern. Die Steuereinheit ist zudem dazu eingerichtet, ein vom Photosensor ausgegebenes Photosensorsignal zu erfassen. Schliesslich ist die Steuereinheit dazu eingerichtet, eine der ersten und der zweiten Wellenlänge λ₁, λ₂ (zeitlich) zugeordnete erste und zweite Streustrahlungsintensität I_{λ1}, I_{λ2} auf Basis des Photosensorsignals zu bestimmen und die erste und zweite Streustrahlungsintensitäten I_{λ1}, I_{λ2} bei der Brandalarmierung mit zu berücksichtigen.

Durch geeignete Auswertung der vom Photosensor empfangenen ersten und zweiten Streustrahlungsintensität I_{λ1}, I_{λ2} ist eine Auswertung hinsichtlich der Partikeleigenschaft oder Partikelbeschaffenheit, wie z.B. der Partikelgrösse, der detektierten Rauchpartikel möglich, wie z.B. durch eine Quotientenbildung aus beiden Streustrahlungsintensitäten I_{λ1}, I_{λ2}. Durch geeignete Bewertung der ermittelten Partikelgrössen oder einer dazu äquivalenten Grösse ist dann in einem gewissen Ausmass eine Unterscheidung z.B. von Rauch, Staub und Wasserdampf möglich.

Die Zweifarben-LED ist typischerweise zum Aussenden von Licht der ersten Wellenlänge λ₁ in einem Bereich von 380 nm bis 570 nm, insbesondere von 470 nm ± 30 nm, ausgebildet. Weiterhin ist die Zweifarben-LED zum Aussenden von Licht der zweiten Wellenlänge λ₂ in einem Bereich von 750 nm bis 1100 nm, insbesondere von 940 nm ± 30 nm, ausgebildet. Eine derartige Zweifarben-LED wird insbesondere gepulst angesteuert. Sie kann mittels einer elektronischen Steuereinheit zum Aussenden von gepulstem Licht der ersten Wellenlänge λ₁, der zweiten Wellenlänge λ₂ oder zum gleichzeitigen Aussenden von Licht der ersten und zweiten Wellenlänge λ₁, λ₂ angesteuert werden.

In der WO 2018/138004 A1 der Anmelderin ist eine Anordnung zur optischen Rauchdetektion nach dem Zweifarben-Prinzip beschrieben. Die dortige Zweifarben-Leuchtdiode umfasst einen LED-Chip zur Emission von Licht in einem ersten Wellenlängenbereich und einen Lichtkonverter zum Umwandeln eines Teils des emittierten Lichts in Licht eines zweiten Wellenlängenbereichs. Der zweite Wellenlängenbereich weist eine spektrale Halbwertsbreite von maximal 100 nm auf. Eine derartige Zweifarben-Leuchtdiode wird als Teil des nachfolgend beschriebenen erfindungsgemässen Streulichtrauchmelder mit beansprucht.

Auf dem Fachgebiet der optischen Rauchdetektion werden optische Rauchmelder, die nach dem Zweifarben-Prinzip arbeiten, synonym auch als Blau/Rot-Melder bezeichnet, entsprechend dem mehr oder weniger "blauen" ersten Wellenlängenbereich und dem mehr oder weniger "roten" zweiten Wellenlängenbereich. Dabei schliesst die Farbe "blau" hier auch das angrenzende kurzwelligere Nah-Ultraviolett (NUV) und die Farbe "rot" das angrenzende langwelligere Nah-Infrarot (NIR) mit ein.

Die Verwendung einer Zweifarben-LED, also einer zweifarbigen Leuchtdiode, für die optische Rauchdetektion nach dem sogenannten Zweifarbenprinzip ist z.B. aus der EP 3 029 646 A1 und EP 2 908 298 A1 der Anmelderin bekannt. Die beschriebenen Zweifarben-LEDs umfassen einen Chipträger, auf dem zwei LED-Chips benachbart zueinander angeordnet sind, wobei der eine LED-Chip Licht der ersten "blauen" Wellenlänge λ₁ und der andere LED-Chip Licht der zweiten "roten" Wellenlänge λ2 emittiert. Die dortigen Streulichtanordnungen mit einer Zweifarben-LED als Bauelement und einem Photosensor erlauben, abhängig vom Streuwinkel zwischen der Zweifarben-LED und dem Photosensor, eine zuverlässige Erkennung der gemäss der Norm EN54-7:2018 spezifizierten Testfeuer TF2 (Pyrolyse-Schwelbrand) sowie der Testfeuer TF4 (offener Kunststoffbrand) und TF5 (Flüssigkeitsbrand, n-Heptan). Die Anordnung erlaubt auch eine Detektion von Wasserdampf als mögliche Störgrösse.

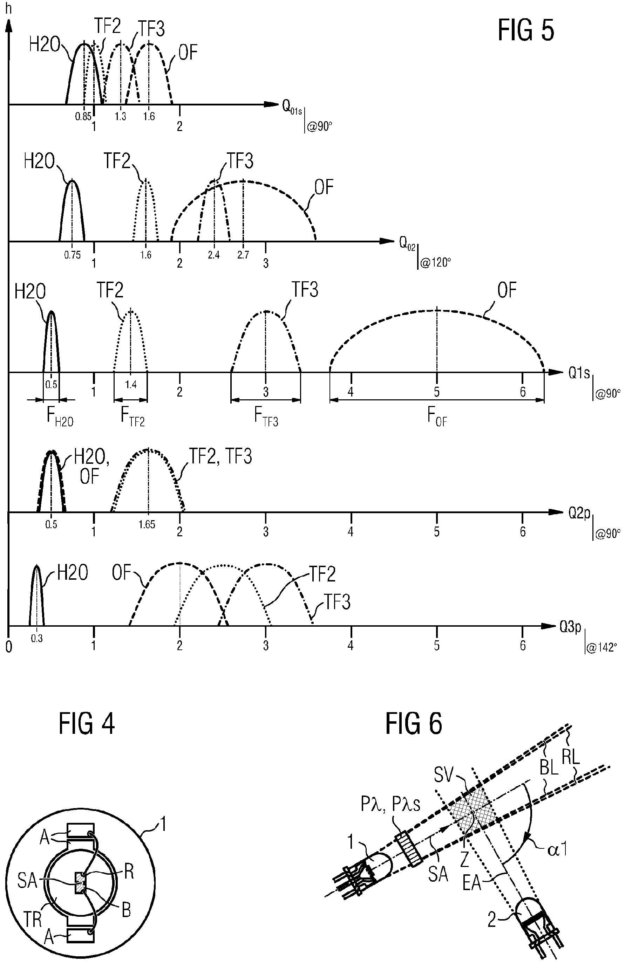

Dies zeigt zur Veranschaulichung die nachfolgende FIG 5 mit einer Verteilung von Testfeuern, aufgetragen über einem Quotienten Q₀₂. Letzterer ist das Verhältnis aus der Streustrahlungsintensität I_{λ1} der ersten "blauen" Wellenlänge zur Streustrahlungsintensität I_{λ2} der zweiten "roten" Wellenlänge λ₂ eines jeweiligen Photosensorsignals. Der Streuwinkel zwischen der Zweifarben-LED und der Photosensor liegt hier exemplarisch bei einem typischen Winkelwert von 120°. Allerdings ist eine zuverlässige Unterscheidung zwischen offenem Feuer, zu dem auch die Testfeuer TF4 und TF5 gehören, und dem Testfeuer TF3 (Glimmbrand Baumwolle) nicht möglich.

Aus dem Stand der Technik ist zudem die Verwendung von polarisiertem IR-Licht für die optische Rauchdetektion bekannt. Eine entsprechende Streulichtanordnung weist eine IR-Leuchtdiode und zwei Photosensoren auf, die unter einem gleichen Streuwinkel zur IR-Leuchtdiode angeordnet sind. Es ist nur einem der Photosensoren ein lineares Polarisationsfilter vorgeschaltet. Eine derartige Anordnung erlaubt eine zuverlässige Erkennung der gemäss der Norm EN54-7:2018 spezifizierten Testfeuer TF2 (Pyrolyse-Schwelbrand) sowie der Testfeuer TF3 (Glimmbrand Baumwolle), TF4 (offener Kunststoffbrand) und TF5 (Flüssigkeitsbrand mit n-Heptan).

Allerdings ist eine zuverlässige Unterscheidung zwischen dem Testfeuer TF2 von der Störgrösse Wasserdampf bzw. Wassernebel nicht möglich. Dies zeigt zur Veranschaulichung die nachfolgende FIG 5 mit einer Verteilung der Testfeuer, aufgetragen über einem Quotienten Q₀₁ₛ. Der Quotient Q₀₁ₛ ist das Verhältnis aus der Streustrahlungsintensität von senkrecht polarisiertem IR-Licht und aus der Streustrahlungsintensität von unpolarisiertem IR-Licht bei einem Streuwinkel von 90°. Die Polarisationsebene des Polarisators verläuft in diesem Fall senkrecht zur Streuebene.

Aus der Europäischen Patentanmeldung EP 0 926 646 A1 ist ein Rauchmelder bekannt, bei dem sichtbares blaues und rotes Licht für die Streulichtdetektion verwendet wird. Es sind zwei Messkanäle vorgesehen, von denen der eine konventionell aufgebaut ist und eine Infrarot-Senderdiode sowie eine Empfangsdiode, und der andere eine farbige LED und/oder ein Polarisationsfilter enthält. Vorzugsweise sind zwei Senderdioden und eine Empfangsdiode oder eine Senderdiode und zwei Empfangsdioden vorgesehen, wobei im letzteren Fall der zweiten Empfangsdiode ein Polarisationsfilter vorgeschaltet oder die zweite Empfangsdiode als Rückwärtsstreuer, evtl. mit vorgeschaltetem Polarisationsfilter, ausgebildet sein kann. Das Polarisationsfilter kann auch zwischen Senderdiode und einer Messkammer des optischen Rauchmelders angeordnet sein.

Aus der deutschen Offenlegungsschrift DE 44 15 063 A1 ist ein Feueralarmsystem bekannt, das ein erstes Lichtaussendungsglied, ein erstes Polarisationsfilter, ein erstes Lichtempfangsglied, ein zweites Lichtaussendungsglied, ein zweites Polarisationsfilter und ein zweites Lichtempfangsglied aufweist. Mittels dieser Anordnung wird der Wert der parallel zu einer Streuungsebene polarisierten Komponente als auch der Wert der senkrecht zu der Streuungsebene polarisierten Komponente ermittelt. Das Verhältnis zwischen diesen Werten des Lichts steht in einer Beziehung zu der Art des Rauches. Ein Berechnungsabschnitt berechnet dieses Verhältnis aus den Ausgabesignalen der Lichtempfangsglieder. Ein Entscheidungsabschnitt vergleicht das genannte Verhältnis mit einem vorher bestimmten Referenzwert, welcher der Art des zu erkennenden Rauches entspricht, wobei die Entscheidung, ob es sich um ein Feuer handelt oder nicht, von der Art des Rauches abhängt. Somit kann ein Feuer aufgrund des von Rauch gestreuten Lichtes unter Berücksichtigung der Art des Rauchs erkannt werden.

Aus der deutschen Offenlegungsschrift DE 10 2015 117 361 A1 ist eine Vorrichtung zur Identifikation von Aerosolen bekannt, wobei die Vorrichtung das an Aerosolen gestreute Licht unter einer bestimmten Winkelkonstellation mittels zumindest einer Lichtdetektionseinrichtung misst. Aus den Detektionssignalen der zumindest einen Lichtdetektionseinrichtung berechnet die Vorrichtung mittels einer Mess- und Recheneinrichtung ein Polarisationsmass und, bei bestimmten Ausführungsformen, einen Depolarisationsgrad. Anhand des Wertes des Polarisationsmasses können Wassertröpfchen von durch Brände entstandenen Aerosolen eindeutig unterschieden werden. Anhand des Wertes des Depolarisationsgrades können Staubpartikel von durch Brände entstandenen Aerosolen eindeutig unterschieden werden. Der Winkel, unter dem die Streulichtmessung erfolgt, beträgt 35° (entspricht einem Rückstreuwinkel von 145°) oder es erfolgt eine Streulichtmessung bei zwei Winkeln (5°, 95°).

In der wissenschaftlichen Publikation von M. Loepfe et al: "Optical Properties of Fire and Non-fire Aerosols", erschienen im "Fire Safety Journal, 29 (1997) 185-194", wurde der Polarisationsgrad von Testbränden und Störgrössen wie Wasser in einem Winkelbereich von 0° bis 180° untersucht. Aus dem beschriebenen winkel- und polarisationsabhängigen Lichtstreuungsexperiment lassen sich Aerosole der EN54-Testbrände aufgrund ihres Polarisationsgrades des Streulichts in drei Gruppen einteilen: TF1, TF4 und TF5 bilden relativ kleine Teilchen mit schwacher Streuung im sichtbaren und im nahen Infrarotbereich, jedoch mit einem hohen Polarisationsgrad von P = 0.9, gemessen bei einer Wellenlänge von 690 nm und unter einem Winkel von 90°. TF3 erzeugt ein Aerosol aus mittelgrossen Partikeln mit einem Polarisationsgrad von P = 0.3 bei 90°. TF2 erzeugt ein Aerosol mit grossen Partikeln mit einem Polarisationsgrad von P = -0.1 bei 90°. Wasserdampf, ein störendes Nicht-Feuer-Aerosol, unterscheidet sich von den oben beschriebenen Brandaerosolen durch eine charakteristische Winkelabhängigkeit des Polarisationsgrades, vor allem in einem Winkelbereich um 150°.

Ausgehend von dem eingangs genannten Stand der Technik ist es eine Aufgabe der vorliegenden Erfindung, einen verbesserten Streulichtrauchmelder mit (nur) einer Zweifarben-LED und mit (nur) einem Photosensor anzugeben.

Es ist eine weitere Aufgabe der Erfindung, eine geeignete Verwendung eines Polarisators bei der optischen Streulichtrauchdetektion nach dem Zweifarbenprinzip anzugeben.

Die Aufgaben werden mit den Gegenständen der Hauptansprüche gelöst. Vorteilhafte Ausführungsformen der vorliegenden Erfindung sind in den abhängigen Ansprüchen angegeben.

Es wird nachfolgend davon ausgegangen, dass das von der Zweifarben-LED emittierte Licht der beiden Wellenlängen λ₁, λ₂ unpolarisiert ist, d.h. einen Polarisationsgrad von 0 bzw. annähernd 0 (< 0.05) aufweist. Der Polarisationsgrad bzw. das Polarisationsmass ist definiert als der Quotient aus der Differenz der beiden Strahlungsintensitäten zu der Summe der beiden Strahlungsintensitäten. Mit der Differenz der beiden Strahlungsintensitäten ist definitionsgemäss der Betrag dieser Differenz gemeint. Der Polarisationsgrad bzw. das Polarisationsmass ist zudem abhängig von der jeweiligen Lichtwellenlänge.

Für die nachfolgenden Betrachtungen ist wie folgt definiert:
- Die Streuebene (auch Streulichtebene) ist die Ebene, die durch die optischen Achsen zumindest einer Leuchtdiode (LED) bzw. Zweifarben-LED und zumindest eines Photosensors aufgespannt wird.
- Die Polarisatorebene ist die Ebene eines flächigen, platten- oder folienförmigen Polarisators.
- Die Polarisationsebene ist diejenige Ebene, welche durch die zeitliche Fortpflanzungsrichtung und durch die Schwingungsrichtung des Lichts bestimmt wird. Umfasst ein Polarisator eine solche Polarisationsebene, so ist damit gemeint, dass für senkrecht auf die Polarisatorebene einfallendes Licht nur die Polarisationsanteile, welche parallel zur umfassten Polarisationsebene liegen, durch den Polarisator hindurchtreten. Die von einem Polarisator umfasste Polarisationsebene ist folglich orthogonal zur Polarisatorebene.
- Die Polarisationsrichtung liegt immer in der Polarisatorebene und ist entweder parallel zur Streuebene oder senkrecht dazu.
- Ist ein Polarisator optisch einer Zweifarben-LED nachgeschaltet, so ist die Polarisatorebene des Polarisators in einem Winkel von 90° +/-5° relativ zur optischen Achse der Zweifarben-LED, vorzugsweise normal (orthogonal) zur optischen Achse der Zweifarben-LED ausgerichtet. Ist ein Polarisator optisch einem Photosensor vorgeschaltet, so ist die Polarisatorebene des Polarisators in einem Winkel von 90° +/-5° relativ zur optischen Achse des Photosensors, vorzugsweise normal (orthogonal) zur optischen Achse des Photosensors ausgerichtet.

Bei der Zweifarben-LED handelt es sich um ein einstückiges bzw. einteiliges optoelektronisches Bauelement, mit anderen Worten also um eine Baueinheit. Vorzugsweise ist eine solche Zweifarben-LED eine Leuchtdiode mit einem transparenten (Standard-)Gehäuse mit einem Durchmesser von 3 mm oder 5 mm. Derartige 3 mm- oder 5 mm-Leuchtdioden werden bekanntermassen "off the shelf" als massenhaftes Consumerprodukt verkauft. Die Zweifarben-LED kann alternativ auch als SMD-Bauteil für die Oberflächenmontage realisiert sein. Vorzugsweise ist die Zweifarben-LED dazu ausgebildet, nur Licht der ersten und/ oder zweiten Wellenlängen λ₁, λ₂, als monochromes Licht der ersten und/oder zweiten Wellenlängen λ₁, λ₂, auszusenden.

Erfindungsgemäss weist der Streulichtrauchmelder einen wellenlängenselektiven Polarisator auf, welcher optisch dem Photosensor vorgeschaltet oder optisch der Zweifarben-LED nachgeschaltet ist. Der wellenlängenselektive Polarisator weist derartige optische Eigenschaften auf, dass das durch den wellenlängenselektiven Polarisator hindurchtretende Licht in Abhängigkeit von dessen jeweiliger Wellenlänge λ₁, λ₂ unterschiedlich stark polarisiert wird bzw. unterschiedlich stark polarisierbar ist. Ein derartiger Polarisator wird auch als Polfilter bzw. als Polarisationsfilter bezeichnet. Er ist vorzugsweise ein linearer Polarisator. Das durch den Polarisator hindurchtretende Licht stammt dabei entweder direkt von der Zweifarben-LED oder es ist Streulicht von zu detektierenden Partikeln im Streulichtvolumen, das von der Zweifarben-LED beleuchtet bzw. bestrahlt wird. Das Streulichtvolumen ist geometrisch bzw. konstruktiv als das Schnittvolumen aus dem emittierten Lichtbündel der Zweifarben-LED mit dem optischen Empfangssektor des jeweiligen Photosensors definiert.

Der Kern der Erfindung liegt in der Kombination des Zweifarben-Streulichtprinzips mit der von der Polarisation des Lichts abhängigen Streuung an Partikeln. Diese Kombination bewirkt in besonders vorteilhafter Weise für geeignete Streuwinkel eine zuverlässige Unterscheidung zwischen offenen Bränden, Schwelbränden und Wasser. Dabei ergänzen sich für geeignete Streuwinkel das Zweifarben-Prinzip, das eine zuverlässige Trennung zwischen offenem Feuer und Wasser ermöglicht, und die von der Polarisation abhängigen Streuung, die eine zuverlässige Trennung von offenen Bränden und Schwelbränden ermöglicht.

Die durch die vorliegende Erfindung möglichen Unterscheidungskriterien enthalten sowohl die Wellenlängenabhängigkeit der Lichtstreuung an den zu detektierenden Partikeln (Aerosole) nach dem Zweifarben-Prinzip als auch den Polarisationseffekt durch Streuung am Aerosol. Durch eine geeignete Wahl der Polarisationsrichtung für die erste Wellenlänge λ₁ lässt sich die Unterscheidbarkeit verschiedener Aerosolkategorien durch die beiden Wellenlängen λ₁, λ₂ verstärken.

Erreicht wird dies gemäss der Erfindung durch eine denkbar einfache Streulichtanordnung als Teil des Streulichtrauchmelders, wobei die Streulichtanordnung (nur) eine Zweifarben-LED und einen (1-kanaligen) Photosensor sowie den in Bezug auf Licht der Zweifarben-LED wellenlängenselektiv wirkenden Polarisator umfasst. Dabei bewirkt die wellenlängenselektive Polarisation für geeignete Streuwinkel eine Veränderung bzw. eine Verschiebung des Verhältnisses aus beiden Streustrahlungsintensitäten I_{λ1}, I_{λ2}, also des Blau-/Rot- bzw. des Rot-/Blau-Verhältnisses, und zwar in der Weise, dass eine zuverlässige Trennung offener Brände von Schwelbränden (TF2) möglich ist (siehe dazu das Verhältnis Q1s in FIG 5 bei einem beispielhaften Streuwinkel von 90°).

Dadurch lassen sich die Alarmzeiten von offenen Bränden und TF2-Schwelbränden besser an den jeweiligen Brand anpassen.

Im Beispiel der FIG 5 ist der erste Quotient Q1s das Verhältnis aus der Streustrahlungsintensität I_{λ1} der linear polarisierten ersten "blauen" Wellenlänge zur Streustrahlungsintensität I_{λ2} der unpolarisierten zweiten "roten" Wellenlänge λ₂ eines jeweiligen Photosensorsignals bei dem gleichen Streuwinkel von 90°. Die Polarisationsebene des Polarisators verläuft in diesem Beispiel senkrecht zur Streuebene. Letztere ist durch die optischen Achsen der Zweifarben-LED und des Photosensors festgelegt.

Durch die wellenlängenselektive Wirkung des Polarisators sind keine zwei separaten einfarbigen LED (Leuchtdioden) für die erste und zweite Wellenlänge erforderlich, wie dies bei der Streulichtanordnung gemäss der deutschen Offenlegungsschrift DE 10 2015 117 361 A1 der Fall ist. Die Bauteilanzahl verringert sich somit vorteilhaft, da gemäss der Erfindung nun zwei LED-Chips mit voneinander verschiedener Wellenlänge in einem einzigen LED-Gehäuse eingesetzt werden. Der wellenlängenselektive Polarisator ist dann dem LED-Gehäuse optisch nachgeschaltet oder dem Photosensor optisch vorgeschaltet. Neben der Ersparnis eines Bauelements ist vorteilhaft der verbleibende Fehler nach einer Kalibrierung des optischen Pfads in der Detektionseinheit reduziert. Typischerweise ergeben sich bei der Montage von zwei separaten Leuchtdioden grössere relative Abweichungen in Ausrichtung und Platzierung zueinander als bei einer Zweifarben-LED.

Ein weiterer Vorteil liegt neben dem damit verbundenen geringeren Montageaufwand vor allem im erheblich verringerten Kalibrierungsaufwand des optischen Pfads bei der erfindungsgemässen Streulichtanordnung.

Ein weiterer grosser Vorteil liegt darin, dass durch die Verwendung der Zweifarben-LED ein nahezu gleiches Streulichtvolumen und somit auch nahezu die gleichen zu detektierenden Partikel entlang eines im Wesentlichen gleichen optischen Pfads beleuchtet werden. Somit wird das Streulichtvolumen geometrisch nur durch die Zweifarben-LED und durch den Empfänger festgelegt, was vorteilhaft wesentlich präziser ist als zwei sich überlappende Streulichtvolumen definiert durch einzelne monochrome LEDs und einem einzigen Empfänger. Messfehler aufgrund abweichender optischer Achsen, wie dies bei der Verwendung zweier separater, benachbarter LED in der DE 10 2015 117 361 A1 der Fall ist, treten hier nicht auf bzw. sind vernachlässigbar.

Nach einer Ausführungsform weist der Polarisator derartige optische Eigenschaften auf, dass das durch den Polarisator hindurchtretende Licht der ersten Wellenlänge λ₁ zumindest teilweise polarisiert wird, während das hindurchtretende Licht der zweiten Wellenlänge λ₂ im Wesentlichen nicht polarisiert wird. Dadurch ist, abhängig vom Streuwinkel, eine besonders effektive Trennung von offenem Feuer von Schwelbränden möglich.

Insbesondere weist der Polarisator derartige optische Eigenschaften auf, dass das durch den Polarisator hindurchtretende Licht der zweiten Wellenlänge λ₂ bzw. das unpolarisiert einfallende, durch den Polarisator hindurchtretende Licht der zweiten Wellenlänge λ₂ einen Polarisationsgrad von maximal 0.05 aufweist. Dieser Wert von 0.05 für den Polarisationsgrad bedeutet dabei, dass das hindurchtretende Licht der zweiten Wellenlänge λ₂ um maximal 5% polarisiert wird und dass der Polarisator für Licht der zweiten "roten" Wellenlänge λ₂ mehr oder weniger transparent ist. Mit anderen Worten ist der Polarisator vom Polarisationszustand des Lichts mehr oder weniger unabhängig transparent.

Der Polarisator wirkt somit nur für eine der beiden Wellenlängen λ₁ als Polarisator. Die andere Wellenlänge λ₂ wird ohne Selektion einer Polarisationsrichtung durchgelassen.

Nach einer weiteren Ausführungsform umfasst der Polarisator eine Polarisationsebene, d.h. er bildet eine Polarisationsebene aus. Er weist zudem derartige optische Eigenschaften auf, dass ein Anteil von mindestens 50%, insbesondere von mindestens 80%, von parallel zur Polarisationsebene des Polarisators polarisiertem Licht der ersten Wellenlänge λ₁ durch den Polarisator hindurchtritt. Dagegen tritt nur noch ein Anteil von höchstens 5%, insbesondere von höchstens 1%, von senkrecht zur Polarisationsebene des Polarisators polarisiertem Licht der ersten Wellenlänge λ₁ durch den Polarisator hindurch. D.h., dass der Polarisator für parallel zur Polarisationsebene des Polarisators polarisierte Lichtanteile der ersten "blauen" Wellenlänge λ₁ mehr oder weniger transparent ist und für "blaue" Lichtanteile senkrecht dazu mehr oder weniger lichtundurchlässig ist.

Nach einer besonders vorteilhaften Ausführungsform ist der Polarisator ein wellenlängenselektiver linearer Polarisator.

Vorzugsweise ist der Polarisator ein aus einer Polymerfolie, insbesondere aus einer Polyvinylalkoholfolie (PVA) mit beispielsweise eindiffundiertem Jod hergestellter Polarisator. Der Polarisator kann beispielsweise eine mechanisch gestreckte Polyvinylalkoholfolie zur Ausrichtung der Polymerketten mit eingebetteten, insbesondere thermisch stabilen Farbstoffen sein. Eine derartige PVA-Folie ist vorzugsweise beidseitig durch eine Tri-Acetate-Cellulose-Schicht geschützt.

Derartige lineare Polarisatoren sind, wenn auch für einen ganz anderen Zweck, aus dem Bereich der LCD-Display-Technik bekannt. Sie sind spektral auf die Empfindlichkeit des menschlichen Auges in einem Wellenlängenbereich von ca. 400 bis 700 nm ausgebildet. Bekannte Herstellerfirmen für derartige Polarisatoren sind z.B. die Bolder Vision Optik Inc. mit dem Polarisatortyp "BVO244", die Edmund Optics GmbH mit dem Polarisatortyp "TECHSPEC High Contrast Plastic Linear Polarizer" (Art. #86-187), die Nitto Deutschland GmbH mit dem Polarisatortyp "SEG1425DU" oder die Polatechno Co. Ltd mit dem Polarisatortyp "EHC-125U".

Die von den zuvor genannten Firmen käuflichen Polarisatoren sind als Plastikfolie (z.B. 100 mm x 100 mm) mit einer typischen Dicke von weniger als 1 mm erhältlich. Diese Folie kann auf einfache Weise z.B. auf einen Polarisator gemäss der Erfindung mit einer Grösse von 5 mm x 5 mm bis 10 mm x 10 mm zugeschnitten werden. Die zugeschnittenen Folien können kreisförmig, rechteckig oder quadratisch sein.

Alternativ kann auch ein Drahtgitter-Polarisator oder ein sogenannter Dye-Type-Polarisator als wellenlängenselektiver linearer Polarisator verwendet werden.

Alternativ zu den vorgenannten wellenlängenselektiven linearen Polarisatoren kann auch ein Polarisator verwendet werden, der einen flächig ausgebildeten, für beide emittierten Wellenlängen λ₁, λ₂ der Zweifarben-LED etwa gleich stark polarisierenden Linearpolarisator sowie ein flächig daran angrenzendes optisches Verzögerungsplättchen umfasst. Das Verzögerungsplättchen umfasst eine Aussenfläche, welche der zum Linearpolarisator angrenzenden Fläche gegenüberliegt. Die Aussenfläche des Verzögerungsplättchen als Teil des Polarisators ist auf das gemeinsame Streulichtvolumen ausgerichtet. Der Polarisator ist dabei optisch dem Photosensor vorgeschaltet oder optisch der Zweifarben-LED nachgeschaltet.

Das Verzögerungsplättchen bewirkt eine Phasenverschiebung zwischen den beiden Polarisationskomponenten des das Plättchen durchlaufenden Lichts. Die Phasenverschiebung hängt von der Doppelbrechung Δn des Materials des Verzögerungsplättchens und von dessen Dicke d ab. Die resultierende optische Verzögerung R beträgt daher Δn * d. Die optische Verzögerung R des Verzögerungsplättchen wird so auf die zweite Wellenlänge λ₂ des emittierten LED-Lichts abgestimmt, wie z.B. auf eine Wellenlänge von 940 nm, dass dieses als λ/4-Plättchen auf die zweite Wellenlänge λ₂ wirkt. LED-Licht, welches auf zu detektierende Rauchteilchen trifft, wird durch diese Rauchteilchen polarisiert. Auf dieses gestreute polarisierte Licht wirkt das Verzögerungsplättchen wie folgt: Durch Streuung an den Streuteilchen wird linear polarisiertes Licht nach Durchlaufen des Verzögerungsplättchens zirkular polarisiert. Den darauffolgenden Linearpolarisator kann nur eine der beiden Polarisationskomponenten des zirkular polarisierten Lichtes passieren. Falls die Streuung an den Streuteilchen das Licht nicht polarisiert, hat das Verzögerungsplättchen keine Wirkung. Auch in diesem Fall kann nur eine der beiden Polarisationskomponenten des unpolarisierten Lichtes den Linearpolarisator passieren. In Summe wirkt die Anordnung aus dem Verzögerungsplättchen und dem nachfolgenden Polarisator derart, als ob unpolarisiertes Licht auf den Photosensor treffen würde, jedoch mit einem Signalverlust von 50 %. Für Licht der ersten Wellenlänge λ₁, wie z.B. von 470 nm = ½ • 940 nm, wirkt das Verzögerungsplättchen etwa als λ/2-Plättchen, welches die Polarisationsrichtung um 90° dreht. Im Vergleich zur vorhergehenden Ausführungsform mit einem wellenlängenselektiven Linearpolarisator ist hier die Polarisationsebene des wellenlängenunabhängigen Polarisators um 90° gedreht.

Nach einer Ausführungsform ist die Zweifarben-LED unter einem ersten Streuwinkel von 45° bis 135°, insbesondere von 60° bis 120° und vorzugsweise von 90° ± 5°, zum Photosensor angeordnet. Die Zweifarben-LED und der Photosensor sind auf ein gemeinsames Streulichtvolumen ausgerichtet. Der Polarisator ist ein linearer Polarisator. Er ist optisch entweder dem Photosensor vorgeschaltet oder der Zweifarben-LED nachgeschaltet. Typischerweise ist ein dem Photosensor optisch vorgeschalteter bzw. ein der Zweifarben-LED optisch nachgeschalteter Polarisator orthogonal zur optischen Achse des Photosensors bzw. der Zweifarben-LED angeordnet. Der Polarisator ist vorzugsweise derart ausgerichtet, dass dessen Polarisationsebene einen Winkel von 90° ± 5° mit einer durch die optischen Achsen der Zweifarben-LED und des Photosensors aufgespannten Streuebene einschliesst. Es handelt sich somit in Bezug auf die Streuebene um einen «senkrechten» Polarisator. Besonders zuverlässige messtechnische Resultate ergeben sich, wenn der Streuwinkel zwischen der Zweifarben-LED und dem Photosensor bei 90° liegt und wenn die Polarisationsebene des Polarisators senkrecht zur Streuebene verläuft.

Nach einer vorteilhaften Ausführungsform dazu, d.h. bei einem Streuwinkel zwischen der Zweifarben-LED und dem Photosensor bei 90° ± 5°, ist die Steuereinheit dazu eingerichtet, aus den beiden Streustrahlungsintensitäten I_{λ1,} I_{λ2} einen ersten Quotienten Q1s zu ermitteln. Die Steuereinheit ist dazu eingerichtet, einen Brandalarm oder einen Schwelbrandalarm auszugeben, falls der erste Quotient Q1s innerhalb eines ersten oder zweiten Quotientenbereichs liegt. Der erste Quotientenbereich ist auf Testfeuer TF2 (Schwelbrand, Pyrolyse-Schwelbrand) und der zweite Quotientenbereich auf Testfeuer TF3 (Schwelbrand, Glimmbrand Baumwolle) abgestimmt. Durch die Ausgabe eines spezifischen Schwelbrandalarms können vorteilhaft vorbereitende Massnahmen für eine Brandlöschung getroffen werden, da mit einer hohen Rauchentwicklung zu rechnen ist. Somit ist vorteilhaft eine Unterscheidung von offenem Feuer zu schwellendem Feuer möglich.

Alternativ kann die Steuereinheit dazu eingerichtet sein, einen Brandalarm oder einen Brandalarm für offenes Feuer auszugeben, falls der erste Quotient Q1s innerhalb eines dritten Quotientenbereichs liegt. Der dritte Quotientenbereich ist auf Testfeuer für offenes Feuer abgestimmt. Durch die Ausgabe eines spezifischen Brandalarms für offenes Feuer können vorteilhaft vorbereitende Massnahmen für eine Brandlöschung getroffen werden, da in diesem Fall, abgesehen von wenigen Ausnahmen (Testfeuer TF8, Decalin-Brand), mit hohen Temperaturen vorort zu rechnen ist.

Die Steuereinheit kann nach einer weiteren Ausführungsform dazu eingerichtet sein, aus den beiden Streustrahlungsintensitäten I_{λ1,} I_{λ2} einen ersten Quotienten Q1s zu ermitteln und dazu eingerichtet sein, eine Ausgabe eines Brandalarms zu unterbinden und/oder eine Warnmeldung für detektiertes "Wasser" im Streulichtvolumen auszugeben, falls der erste Quotient Q1s innerhalb eines vierten Quotientenbereichs liegt. Der vierte Quotientenbereich ist auf das Vorliegen von Wasserdampf oder Wassernebel abgestimmt bzw. indikativ hierfür. Dadurch kann die Ausgabe eines möglichen Fehlalarms verhindert werden.

Insbesondere gilt als eine Regel für einen jeweiligen Wertebereich der zuvor genannten Quotientenbereiche: Die Quotientenwerte des vierten Quotientenbereichs "Wasserdampf" < Quotientenwerte des ersten Quotientenbereichs "Pyrolyse-Schwelbrand" < Quotientenwerte des zweiten Quotientenbereichs "Glimmbrand Baumwolle" < Quotientenwerte des dritten Quotientenbereichs "offenes Feuer". Qualitativ heisst das: Je grösser die Quotientenwerte sind, desto kleiner sind auch die detektierten Teilchen.

Für das Beispiel gemäss FIG 5 umfasst der erste Quotientenbereich einen Wert für den ersten Quotienten Q1s von 1.4 ± 0.2, insbesondere von 1.4 ± 0.15. Der zweite Quotientenbereich umfasst einen Wert für den ersten Quotienten Q1s von 3 ± 0.5, insbesondere von 3 ± 0.4. Der dritte Quotientenbereich umfasst einen Wert für den ersten Quotienten Q1s von 5 ± 1.3, insbesondere von 5 ± 1.25. Der vierte Quotientenbereich umfasst einen Wert für den ersten Quotienten Q1s von 0.5 ± 0.15, insbesondere von 0.5 ± 0.1. Die Werte der jeweiligen Quotientenbereiche sind abhängig vom Streuwinkel sowie von der Ausrichtung der Polarisationsebene des Polarisators.

Gemäss aktualisierten messtechnischen Untersuchungen umfasst der erste Quotientenbereich einen Wert für den ersten Quotienten Q1s von 1.35 ± 0.2. Der zweite Quotientenbereich umfasst einen Wert von 2 ± 0.5. Der dritte Quotientenbereich umfasst einen von 5 ± 1.6. Der vierte Quotientenbereich umfasst einen Wert von 0.6 ± 0.2. Die Werte der jeweiligen Quotientenbereiche sind dabei wiederum abhängig vom Streuwinkel sowie von der Ausrichtung der Polarisationsebene des Polarisators.

Es wird angemerkt, dass anstelle der vorherigen Quotientenbereiche auch der jeweilige Kehrwert ermittelt werden kann. In diesem Fall weisen die jeweiligen Werte für die Quotientenbereiche den Kehrwert auf. Zudem kehren sich die Vergleichsoperatoren wie kleiner oder grösser ebenfalls um.

Weiterhin wird angemerkt, dass die zuvor genannten Quotientenbereiche messtechnisch bei einem Streuwinkel von 90° und senkrechter Polarisationsebene ermittelt worden sind. Generell bewegen sich mit abnehmenden Streuwinkelwerten die Quotienten Q1s der Testfeuer TF2, TF3 und Wasserdampf H2O aufeinander zu, wobei sich die Abstände zueinander verringern. Mit zunehmenden Streuwinkelwerten nähern sich einerseits die Quotienten Q1s des Testfeuers TF2 und Wasserdampf H2O und andererseits die Quotienten Q1s des Testfeuers TF3 und offenes Feuer OF stark an.

Nach einer weiteren Ausführungsform liegt der Streuwinkel zwischen der Zweifarben-LED und dem Photosensor bei 90° ± 5°. Die Polarisationsebene des Polarisators verläuft parallel zur Streuebene. Letztere ist durch die optischen Achsen der Zweifarben-LED und des Photosensors festgelegt. Die Steuereinheit ist dazu eingerichtet, aus den beiden Streustrahlungsintensitäten I_{λ1}, I_{λ2} einen zweiten Quotienten Q2p zu ermitteln. Die Steuereinheit ist dazu eingerichtet, einen Brandalarm auszugeben, falls der zweite Quotient Q2p innerhalb eines weiteren ersten oder weiteren zweiten Quotientenbereichs liegt. Der weitere erste Quotientenbereich ist hier auf offene Feuer OF und der weitere zweite Quotientenbereich auf Testfeuer TF2 und TF3 (Schwelbrand, Pyrolyse-Schwelbrand) abgestimmt. Die Steuereinheit kann alternativ oder zusätzlich zur Ausgabe eines spezifischen offenen Brands eingerichtet sein, wenn der zweite Quotient Q2p innerhalb des weiteren ersten Quotientenbereichs liegt. Alternativ oder zusätzlich kann die Steuereinheit zur Ausgabe eines spezifischen Schwelbrandalarms eingerichtet sein, wenn der zweite Quotient Q2p innerhalb des weiteren zweiten Quotientenbereichs liegt.

Im vorliegenden Fall ist jedoch keine Unterscheidung von offenem Feuer OF und Wasserdampf möglich, da der zweite Quotient Q2p bei Vorhandensein von Wasserdampf oder Wassernebel in etwa die Werte des weiteren ersten Quotientenbereichs umfasst.

Nach einer weiteren Ausführungsform liegt der Streuwinkel, d.h. ein zweiter Streuwinkel, zwischen der Zweifarben-LED und dem Photosensor bei 142° ± 5°, vorzugsweise von 142° ± 1°. Das unter diesem Winkelbereich an Wasserdampf bzw. Wassernebel gestreute Licht wird wie bei einem Regenbogen stark polarisiert. Die Polarisationsebene des Polarisators verläuft parallel zur Streuebene. Es handelt sich somit in Bezug auf die Streuebene um einen «parallelen» Polarisator. Letztere ist durch die optischen Achsen der Zweifarben-LED und des Photosensors festgelegt. Die Steuereinheit ist dazu eingerichtet, aus den beiden Streustrahlungsintensitäten I_{λ1}, I_{λ2} einen dritten Quotienten Q3p zu ermitteln. Die Steuereinheit ist dazu eingerichtet, einen Brandalarm auszugeben, falls der dritte Quotient Q3p innerhalb eines nochmals weiteren zweiten Quotientenbereichs liegt. Ein nochmals weiterer erster Quotientenbereich ist hier auf das Vorliegen von Wasserdampf H2O und der nochmals weitere zweite Quotientenbereich auf die Testfeuer TF2 und TF3 (Schwelbrand, Pyrolyse-Schwelbrand) sowie auf offenes Feuer OF abgestimmt. Im vorliegenden Fall ist eine zuverlässige Detektion eines Brandes möglich. Zugleich ist eine zuverlässige Unterscheidung zwischen einem Brand und zwischen dem Vorhandensein von Wasserdampf möglich. Mit anderen Worten ist eine zuverlässige Erkennung von Wasserdampf und somit eine Störunterdrückung möglich.

Nach einer weiteren Ausführungsform ist die Zweifarben-LED unter einem zweiten Streuwinkel von 142° ± 5°, vorzugsweise von 142° ± 1°, zum Photosensor angeordnet. Der zweite Streuwinkel kann, da deutlich grösser als 90°, auch als Rückwärtsstreuwinkel bezeichnet werden. Die Zweifarben-LED und der Photosensor sind auf ein gemeinsames Streulichtvolumen ausgerichtet. Der Polarisator ist ein linearer (wellenlängenselektiver) Polarisator. Er ist optisch entweder dem Photosensor vorgeschaltet oder der Zweifarben-LED nachgeschaltet. Der Polarisator ist derart ausgerichtet, dass dessen Polarisationsebene einen Winkel von 0° ± 5°, vorzugsweise von 0°, mit einer durch die optischen Achsen der Zweifarben-LED und des Photosensors aufgespannten Streuebene einschliesst. Mit anderen Worten verläuft die Polarisationsebene parallel zu dieser aufgespannten Streuebene.

Das unter dem zweiten Streuwinkel an Wasserdampf bzw. Wassernebel gestreute Licht wird wie bei einem Regenbogen stark polarisiert. Somit wird der dritte Quotient Q3p bei derartigen Wasser-Phänomenen im Vergleich zu einer Streulichtanordnung ohne Polfilter stärker in den Störgrössenbereich, also hin zu "grossen Teilchen" wie Staub, verschoben.

Nach einer Ausführungsform ist die Steuereinheit dazu eingerichtet, aus den beiden Streustrahlungsintensitäten I_{λ1}, I_{λ2} einen dritten Quotienten Q3p zu ermitteln. Sie ist zudem dazu eingerichtet, die Ausgabe eines Brandalarms zu unterbinden und/oder eine Warnmeldung für detektierten Wasserdampf oder Wassernebel im Streulichtvolumen auszugeben, falls der dritte Quotient Q3p innerhalb des nochmals weiteren ersten Quotientenbereichs liegt. Der nochmals weitere erste Quotientenbereich kann z.B. messtechnisch ermittelt werden.

Nach einer vorteilhaften Ausführungsform weist der Streulichtrauchmelder anstelle des nur einen Photosensors einen ersten und zweiten Photosensor mit einem optisch vorgeschalteten ersten und zweiten, das jeweilige hindurchtretende Licht in Abhängigkeit von dessen jeweiliger Wellenlänge λ₁, λ₂ unterschiedlich stark polarisierenden Polarisator auf. Die Zweifarben-LED ist unter einem ersten Streuwinkel von 45° bis 135°, insbesondere von 60° bis 120° und vorzugsweise von 90° ± 5°, zum ersten Photosensor angeordnet. Die Zweifarben-LED ist zudem unter einem zweiten Streuwinkel von 142° ± 5°, vorzugsweise von 142° ± 1°, zum zweiten Photosensor angeordnet. Die Zweifarben-LED und beide Photosensoren sind auf ein gemeinsames Streulichtvolumen ausgerichtet. Die Steuereinheit ist mit der Zweifarben-LED und den beiden Photosensoren insbesondere signal- und/oder datentechnisch verbunden und dazu eingerichtet, die Zweifarben-LED zum Aussenden von Licht der ersten oder zweiten Wellenlänge λ₁, λ₂ anzusteuern. Die Steuereinheit ist zudem dazu eingerichtet, je ein Photosensorsignal der beiden Photosensoren zu erfassen, jeweils eine erste und zweite Streustrahlungsintensität I_{λ11}, I_{λ12}; I_{λ21}, I_{λ22} für die erste und zweite Wellenlänge λ₁, λ₂ auf Basis des jeweiligen Photosensorsignals zu bestimmen und die jeweiligen ersten und zweiten Streustrahlungsintensitäten I_{λ11}, I_{λ12}; I_{λ21}, I_{λ22} bei der Brandalarmierung mit zu berücksichtigen.

Das Streulichtvolumen ist geometrisch bzw. konstruktiv als das Schnittvolumen aus dem emittierten Lichtbündel der Zweifarben-LED mit dem optischen Empfangssektor des jeweiligen Photosensors definiert.

Nach einer zur vorherigen Ausführungsform alternativen Ausführungsform weist der Streulichtrauchmelder anstelle des einen Photosensors einen ersten und zweiten Photosensor auf. Die Zweifarben-LED ist unter einem ersten Streuwinkel von 45° bis 135°, insbesondere von 60° bis 120° und vorzugsweise von 90° ± 5°, zum ersten Photosensor angeordnet. Zudem ist die Zweifarben-LED unter einem zweiten Streuwinkel von 142° ± 5°, vorzugsweise von 142° ± 1°, zum zweiten Photosensor angeordnet. Die Zweifarben-LED und die beiden Photosensoren sind auf ein gemeinsames Streulichtvolumen ausgerichtet. Der Zweifarben-LED ist optisch ein Polarisator nachgeschaltet, der das jeweilige hindurchtretende, von der Zweifarben-LED ausgesendete Licht in Abhängigkeit von dessen jeweiliger Wellenlänge λ₁, λ₂ unterschiedlich stark polarisiert. Die Steuereinheit ist mit der Zweifarben-LED und den beiden Photosensoren insbesondere signal- und/oder datentechnisch verbunden und dazu eingerichtet bzw. programmiert, die Zweifarben-LED zum Aussenden von Licht der ersten oder zweiten Wellenlänge λ₁, λ₂ anzusteuern, je ein Photosensorsignal der beiden Photosensoren zu erfassen, jeweils eine erste und zweite Streustrahlungsintensität I_{λ11}, I_{λ12}; I_{λ21}, I_{λ22} für die erste und zweite Wellenlänge λ₁, λ₂ auf Basis des jeweiligen Photosensorsignals zu bestimmen und die jeweiligen ersten und zweiten Streustrahlungsintensitäten I_{λ11}, I_{λ12}; I_{λ21}, I_{λ22} bei der Brandalarmierung mit zu berücksichtigen.

Im Vergleich zur vorherigen Ausführungsform ist hier vorteilhaft anstelle von zwei wellenlängenselektiven Polarisatoren nur ein einziger wellenlängenselektiver Polarisator erforderlich. Zudem vergrössert sich der Abstand zwischen offenem Feuer und Schwellbrand. Darüber hinaus vereinfacht sich der konstruktive Aufbau.

Alternativ zu den beiden vorausgegangenen Ausführungsformen kann der Streulichtmelder anstelle der nur einen Zweifarben-LED eine erste und zweite Zweifarben-LED mit einem optisch nachgeschalteten ersten und zweiten, das jeweilige hindurchtretende Licht in Abhängigkeit von dessen jeweiliger Wellenlänge λ₁, λ₂ unterschiedlich stark polarisierenden Polarisator aufweisen. Diese Streulichtanordnung kann als duale Streulichtanordnung zu der vorherigen Ausführungsform angesehen werden. Der Photosensor ist unter einem ersten Streuwinkel im Bereich von 45° bis 135°, insbesondere von 60° bis 120° und vorzugsweise von 90° ± 5°, zur ersten Zweifarben-LED angeordnet. Zudem ist der Photosensor unter einem zweiten Streuwinkel von 142° ± 5°, vorzugsweise von 142° ± 1°, zur zweiten Zweifarben-LED angeordnet. Der Photosensor und die beiden Zweifarben-LED sind auf ein gemeinsames Streulichtvolumen ausgerichtet. Die Steuereinheit ist mit dem Photosensor und mit den beiden Zweifarben-LED insbesondere signal- und/oder datentechnisch verbunden. Die Steuereinheit ist zudem dazu eingerichtet, die beiden Zweifarben-LED jeweils zum Aussenden von Licht der ersten oder zweiten Wellenlänge λ₁, λ₂ anzusteuern, ein Photosensorsignal des Photosensors zu erfassen, jeweils eine erste und zweite Streustrahlungsintensität I_{λ11}, I_{λ12}; I_{λ21}, I_{λ22} für die erste und zweite Wellenlänge λ₁, λ₂ auf Basis der jeweils angesteuerten Zweifarben-LED zu bestimmen und die jeweiligen ersten und zweiten Streustrahlungsintensitäten I_{λ11}, I_{λ12}; I_{λ21}, I_{λ22} bei der Brandalarmierung mit zu berücksichtigen.

Nach einer weiteren zur vorangegangenen Ausführungsform alternativen Ausführungsform weist der erfindungsgemässe Streulichtrauchmelder anstelle der einen Zweifarben-LED eine erste und zweite Zweifarben-LED auf. Der Photosensor ist unter einem ersten Streuwinkel im Bereich von 45° bis 135°, insbesondere von 60° bis 120° und vorzugsweise von 90° ± 5°, zur ersten Zweifarben-LED angeordnet. Zudem ist der Photosensor unter einem zweiten Streuwinkel von 142° ± 5°, vorzugsweise von 142° ± 1°, zur zweiten Zweifarben-LED angeordnet. Der Photosensor und die beiden Zweifarben-LED sind auf ein gemeinsames Streulichtvolumen ausgerichtet. Es ist dem Photosensor optisch ein Polarisator vorgeschaltet, der das jeweilige hindurchtretende Licht in Abhängigkeit von dessen jeweiliger Wellenlänge λ₁, λ₂ unterschiedlich stark polarisiert. Die Steuereinheit ist mit dem Photosensor und den beiden Zweifarben-LED insbesondere signal- oder datentechnisch verbunden. Sie ist dazu eingerichtet bzw. programmiert, die beiden Zweifarben-LED jeweils zum Aussenden von Licht der ersten oder zweiten Wellenlänge λ₁, λ₂ anzusteuern, ein Photosensorsignal des Photosensors zu erfassen, jeweils eine erste und zweite Streustrahlungsintensität I_{λ11}, I_{λ12}; I_{λ21}, I_{λ22} für die erste und zweite Wellenlänge λ₁, λ₂ auf Basis der jeweils angesteuerten Zweifarben-LED zu bestimmen und die jeweiligen ersten und zweiten Streustrahlungsintensitäten I_{λ11}, I_{λ12}; I_{λ21}, I_{λ22} bei der Brandalarmierung mit zu berücksichtigen.

Auch hier ist im Vergleich zur vorherigen Ausführungsform vorteilhaft anstelle von zwei wellenlängenselektiven Polarisatoren nur ein einziger wellenlängenselektiver Polarisator erforderlich. Zudem vergrössert sich der Abstand zwischen offenem Feuer und Schwellbrand. Dadurch vereinfacht sich der konstruktive Aufbau.

Die zuvor genannten vier Ausführungsformen ermöglichen eine kombinierte Auswertung mit einer höheren Sicherheit gegenüber Fehlalarmen im Sinne eines Multikriterien-Rauchmelders, insbesondere im Hinblick auf Wasserdampf oder Wassernebel als Störgrösse bei der Branddetektion.

Nach einer weiteren Ausführungsform sind der erste und zweite Polarisator bei den zuvor beschriebenen beiden Ausführungsformen mit zwei Polarisatoren lineare (wellenlängenselektive) Polarisatoren. Es ist der erste Polarisator derart ausgerichtet, dass dessen Polarisationsebene einen Winkel von 90° ± 5° mit einer durch die optischen Achsen der Zweifarben-LED(s) und der Photosensoren bzw. des Photosensors aufgespannten Streuebene einschliesst. Es ist der zweite Polarisator derart ausgerichtet ist, dass dessen Polarisationsebene einen Winkel von 0° ± 5° mit dieser Ebene einschliesst.

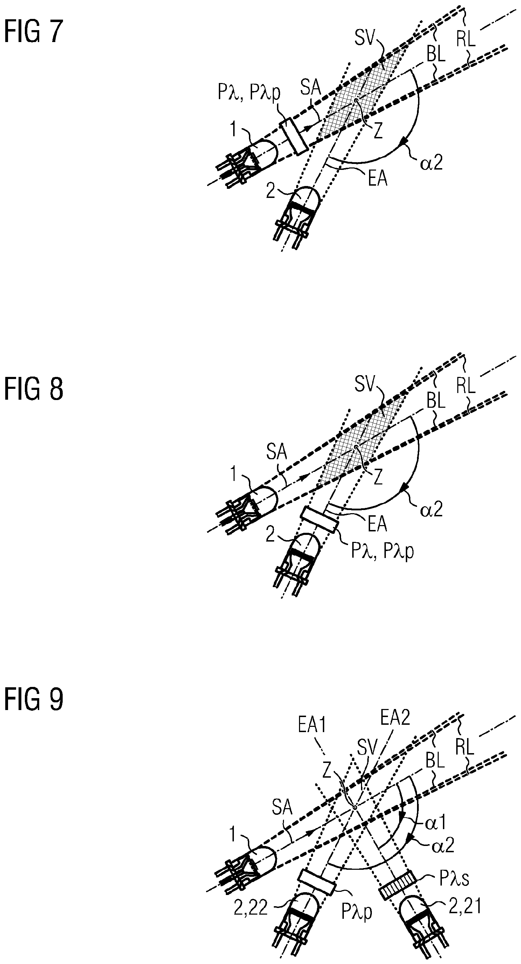

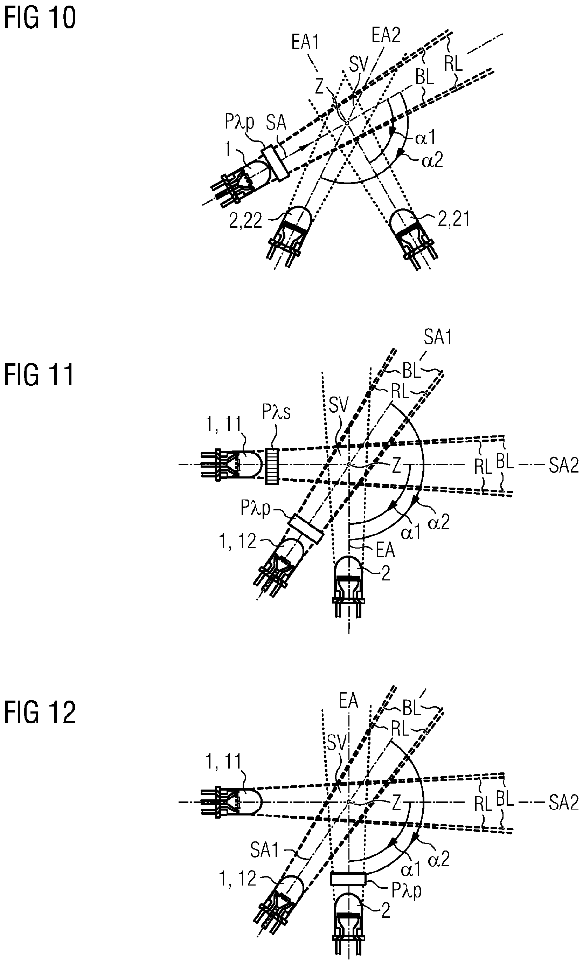

Der erste "senkrechte" Polarisator ist bei der Streulichtanordnung mit einer einzigen Zweifarben-LED und mit zwei Photosensor dem Photosensor optisch vorgeschaltet, der in einem Winkel von 90° ± 5° zur Zweifarben-LED angeordnet ist. Entsprechend ist der zweite "parallele" Polarisator dem verbleibenden Photosensor vorgeschaltet (siehe FIG 9). Im anderen "dualen" Fall ist der erste "senkrechte" Polarisator derjenigen Zweifarben-LED optisch nachgeschaltet, die in einem Winkel von 90° ± 5° zum einzigen Photosensor angeordnet ist. Entsprechend ist der zweite "parallele" Polarisator der verbleibenden Zweifarben-LED nachgeschaltet (siehe FIG 11).

Nach einer weiteren Ausführungsform ist der Polarisator bei den zuvor beschriebenen beiden Ausführungsformen mit einem einzigen Polarisator ein linearer (wellenlängenselektiver) Polarisator. Letzterer ist derart ausgerichtet, dass dessen Polarisationsebene einen Winkel von 0° ± 5° mit einer durch die optische Achse der Zweifarben-LED oder des Photosensors aufgespannten Streuebene einschliesst.

Vorzugsweise ist die Steuereinheit nach einer weiteren Ausführungsform, d.h. unter dem ersten Streuwinkel (90°± 5°) und bei senkrechter Ausrichtung der Polarisationsebene des jeweiligen Polarisators in Bezug zur Streuebene, dazu eingerichtet, aus der dem ersten Streuwinkel zugeordneten ersten und zweiten Streustrahlungsintensität I_{λ11}, I_{λ12} einen ersten Quotienten Q1s zu ermitteln und aus der dem zweiten Streuwinkel zugeordneten ersten und zweiten Streustrahlungsintensität I_{λ21}, I_{λ22} einen dritten Quotienten Q3p zu ermitteln. Sie ist zudem dazu eingerichtet, einen Brandalarm und/oder Schwelbrandalarm auszugeben, falls der erste Quotient Q1s innerhalb des ersten oder zweiten Quotientenbereichs liegt, oder einen Brandalarm und/oder Brandalarm für offenes Feuer auszugeben, falls der erste Quotient Q1s innerhalb des dritten Quotientenbereichs liegt. Zudem ist die Steuereinheit dazu eingerichtet, eine Ausgabe eines Brandalarms zu unterbinden und/oder eine Warnmeldung für detektierten Wasserdampf bzw. Wassernebel im Streulichtvolumen auszugeben, falls der erste Quotient Q1s innerhalb des vierten Quotientenbereichs und/oder der dritte Quotient Q3p innerhalb des nochmals weiteren ersten Quotientenbereichs liegt. Insbesondere ist die Steuereinheit dazu eingerichtet, die Ausgabe eines Brandalarms zu unterbinden und/oder eine Warnmeldung für detektierten Wasserdampf bzw. Wassernebel im Streulichtvolumen auszugeben, falls der erste Quotient Q1s innerhalb des vierten Quotientenbereichs und zugleich der dritte Quotient Q3p innerhalb des nochmals weiteren ersten Quotientenbereichs liegt. Dadurch erhöht sich vorteilhaft die Fehlalarmsicherheit.

Vorzugsweise ist die Steuereinheit nach einer weiteren Ausführungsform, d.h. unter dem ersten Streuwinkel (90°± 5°) und bei paralleler Ausrichtung der Polarisationsebene des jeweiligen Polarisators in Bezug zur Streuebene, dazu eingerichtet, aus der dem ersten Streuwinkel zugeordneten ersten und zweiten Streustrahlungsintensität I_{λ11}, I_{λ12} einen zweiten Quotienten Q2p zu ermitteln und aus der dem zweiten Streuwinkel zugeordneten ersten und zweiten Streustrahlungsintensität I_{λ21}, I_{λ22} einen dritten Quotienten Q3p zu ermitteln. Sie ist zudem dazu eingerichtet, einen Brandalarm und/oder Schwelbrandalarm auszugeben, falls der zweite Quotient Q2p innerhalb des weiteren zweiten Quotientenbereichs liegt, oder einen Brandalarm auszugeben, falls der dritte Quotient Q3p innerhalb des nochmals weiteren zweiten Quotientenbereichs liegt. Zudem ist die Steuereinheit dazu eingerichtet, eine Ausgabe eines Brandalarms zu unterbinden und/oder eine Warnmeldung für detektierten Wasserdampf bzw. Wassernebel im Streulichtvolumen auszugeben, falls der zweite Quotient Q2p innerhalb des weiteren ersten Quotientenbereichs und/oder der dritte Quotient Q3p innerhalb des nochmals weiteren ersten Quotientenbereichs liegt. Insbesondere ist die Steuereinheit dazu eingerichtet, die Ausgabe eines Brandalarms zu unterbinden und/oder eine Warnmeldung für detektierten Wasserdampf bzw. Wassernebel im Streulichtvolumen auszugeben, falls der zweite Quotient Q2p innerhalb des weiteren ersten Quotientenbereichs und zugleich der dritte Quotient Q3p innerhalb des nochmals weiteren ersten Quotientenbereichs liegt. Dadurch erhöht sich vorteilhaft die Fehlalarmsicherheit.

Nach einer Ausführungsform ist die Zweifarben-LED zum Aussenden von Licht der ersten Wellenlänge λ₁ in einem Bereich von 380 nm bis 570 nm, insbesondere von 470 nm ± 30 nm, und zum Aussenden von Licht der zweiten Wellenlänge λ₂ in einem Bereich von 750 nm bis 1100 nm, insbesondere von 940 nm ± 30 nm, ausgebildet.

Der Photosensor ist insbesondere eine Halbleiter-Photodiode, insbesondere eine Silizium-PIN-Photodiode. Sie ist vorzugsweise eine Silizium-PIN-Photodiode mit verbesserter Blauempfindlichkeit im Bereich der ersten Wellenlänge. Der Photosensor kann alternativ auch ein Phototransistor sein.

Nach einer weiteren Ausführungsform ist die Steuereinheit dazu eingerichtet, die Zweifarben-LED zum Aussenden von gepulstem Licht der ersten Wellenlänge λ₁ oder der zweiten Wellenlänge λ₂ anzusteuern. Üblicherweise werden durch Ansteuerung mittels der Steuereinheit die Lichtimpulse der ersten oder zweiten Wellenlänge λ₁, λ₂ wiederholt, insbesondere zyklisch, in das Streulichtvolumen eingestrahlt, wie z.B. mit einer Wiederholungsfrequenz im Bereich von 0.1 bis 5 Hz. Die Pulsdauer liegt vorzugsweise im Bereich von 20 µs bis 1 ms.

Vorzugsweise werden nur Lichtimpulse der ersten Wellenlänge λ₁ wiederholt, insbesondere zyklisch, in das Streulichtvolumen eingestrahlt, solange die zugehörige Streustrahlungsintensität I_{λ1} unterhalb eines Mindeststreulichtpegels bleibt. Nur wenn eine ausreichende Konzentration von Rauchpartikeln, Staub oder Dampf in das Streulichtvolumen gelangt, wird dieser Mindeststreulichtpegel überschritten. Es werden dann zusätzlich Lichtimpulse der zweiten Wellenlänge λ₂ in das Streulichtvolumen eingestrahlt, sodass auf Basis des Zweifarben-Prinzips die Teilchengrösse bzw. eine zur Teilchengösse äquivalente Grösse zur Bestimmung des Teilchentyps im Streulichtvolumen mittels der Steuereinheit ermittelbar ist. Die Lichtimpulse der ersten und zweiten Wellenlänge λ₁, λ₂ werden in diesem Fall abwechselnd in das Streulichtvolumen mittels geeigneter gepulster Ansteuerung der Zweifarben-LED durch die Steuereinheit eingestrahlt.

Diese führt vorteilhaft zu einer besonders stromsparenden Betriebsweise des Rauchmelders, da über die Betriebszeit gemittelt nur selten weitere Lichtimpulse der zweiten Wellenlänge λ₂ in das Streulichtvolumen eingestrahlt werden müssen.

Nach einer weiteren Ausführungsform ist die Steuereinheit dazu eingerichtet, die dem ersten Streuwinkel zugeordneten ersten und zweiten Streustrahlungsintensitäten I_{λ11}, I_{λ12} dahingehend zu normieren, dass der erste Quotient Q1s und/oder der zweite Quotient Q2p für im Streulichtvolumen eingebrachte Streuteilchen mit einem vorgegebenen mittleren Durchmesser im Bereich von 0.5 bis 1.5 µm einen Quotientenwert im Bereich von 1 bis 3, insbesondere einen Quotientenwert von 2, aufweist. Alternativ oder zusätzlich ist die Steuereinheit dazu eingerichtet, die dem zweiten Streuwinkel zugeordneten ersten und zweiten Streustrahlungsintensitäten I_{λ21}, I_{λ22} dahingehend zu normieren, dass der dritte Quotient Q3p für im Streulichtvolumen eingebrachte Streuteilchen mit einem vorgegebenen mittleren Durchmesser im Bereich von 0.5 bis 1.5 µm einen Quotientenwert im Bereich von 1 bis 3, insbesondere einen Quotientenwert von 2, aufweist.

Gemäss der vorliegenden Erfindung kann ein wellenlängenselektiver Polarisator besonders vorteilhaft bei der optischen Streulichtrauchdetektion nach dem Zweifarbenprinzip verwendet werden. Dabei wird ein zur optischen Rauchdetektion ausgesandtes monochromes Licht einer ersten Wellenlänge λ₁ und ein ausgesandtes monochromes Licht einer zweiten Wellenlänge λ₂ mittels des wellenlängenselektiven Polarisators unterschiedlich stark polarisiert.

Der Polarisator weist derartige optische Eigenschaften auf, dass das durch ihn hindurchtretende Licht in Abhängigkeit von dessen jeweiliger Wellenlänge λ₁, λ₂ unterschiedlich stark polarisiert wird. Er ist vorzugsweise ein linearer Polarisator mit derartigen optischen Eigenschaften, dass das durch ihn hindurchtretende Licht der zweiten Wellenlänge λ₂, d.h. das unpolarisiert einfallende, durch den linearen Polarisator hindurchtretende Licht der zweiten Wellenlänge λ₂, einen Polarisationsgrad von maximal 0.05 aufweist. Dies bedeutet, dass der Polarisator für Licht der zweiten "roten" Wellenlänge λ₂ mehr oder weniger transparent ist. Mit anderen Worten ist der lineare Polarisator vom Polarisationszustand des Lichts mehr oder weniger unabhängig transparent.

Der Polarisator wirkt im Wesentlichen nur für eine der beiden Wellenlängen λ₁ als Polarisator. Die andere Wellenlänge λ₂ wird ohne Selektion einer Polarisationsrichtung durchgelassen. Der Polarisator weist derartige optische Eigenschaften auf, dass ein Anteil von mindestens 50%, insbesondere von mindestens 80%, von parallel zur Polarisationsebene des Polarisators polarisiertem Licht der ersten Wellenlänge λ₁ durch den Polarisator hindurchtritt. Dagegen tritt nur noch ein Anteil von höchstens 5%, insbesondere von höchstens 1%, von senkrecht zur Polarisationsebene des Polarisators polarisiertem des Lichts der ersten Wellenlänge λ₁ durch den Polarisator hindurch. Der Polarisator ist somit für Lichtanteile der ersten Wellenlänge λ₁ parallel zur Polarisationsebene des Polarisators mehr oder weniger transparent und für Lichtanteile senkrecht dazu mehr oder weniger lichtundurchlässig.

Der erfindungsgemässe Streulichtrauchmelder weist insbesondere eine prozessorgestützte Steuereinheit auf, welche mit zumindest einer der beiden Zweifarben-LEDs und mit zumindest einem der beiden Photosensoren verbunden ist. Zudem weist die Steuereinheit Ausgabemittel zumindest für einen Brandalarm oder für eine Warnmeldung aus. Die Steuereinheit weist zudem einen mit einem Computerprogramm ladbaren elektronischen Speicher auf. Das Computerprogramm umfasst dabei geeignete, durch die prozessorgestützte Steuereinheit ausführbare Instruktionen zur optischen Branddetektion auf. Die prozessorgestützte Steuereinheit ist vorzugsweise ein Mikrocontroller. Ein derartiger Mikrocontroller weist typischerweise eine Reihe von integrierten Hardware-Funktionseinheiten auf, wie z.B. Analog-/Digital-Umsetzer, Digital-/Analog-Umsetzer, Timer, digitale Ein-/Ausgabe-Einheiten sowie Busschnittstellen, unter anderem als Ausgabemittel für einen Brandalarm oder einer Warnmeldung.

Derartige Streulichtrauchmelder weisen üblicherweise ein Meldergehäuse mit zumindest einer Raucheintrittsöffnung auf. Ein solcher Streulichtrauchmelder umfasst vorzugsweise eine gegen Umgebungslicht abgeschirmte, jedoch für zu detektierenden Rauch durchlässige optische Messkammer. Letztere umfasst die zumindest eine Zweifarben-LED und den zumindest einen Photosensor in einer Streulichtanordnung für die optische Rauchdetektion gemäss der Erfindung. Die optische Messkammer weist üblicherweise eine Vielzahl von Umgebungslicht abschirmenden Lamellen auf und wird daher auch als Labyrinth bezeichnet.

Alternativ kann der Streulichtrauchmelder ein sogenannter offener Streulichtrauchmelder sein. In diesem Fall weist der Streulichtrauchmelder kein Labyrinth auf. Vielmehr sind dann die jeweilige Zweifarben-LED und der jeweilige Photosensor im Meldergehäuse angeordnet. Sie sind zudem in einer Streulichtanordnung mit einem ausserhalb des Meldergehäuses und somit mit einem ausserhalb des gesamten Streulichtrauchmelders liegenden Streulichtvolumen angeordnet.

Die Erfindung sowie vorteilhafte Ausführungen der vorliegenden Erfindung werden am Beispiel der nachfolgenden Figuren erläutert. Dabei zeigen:
- FIG 1: eine Streulichtanordnung mit einer Zweifarben-LED und einem Photosensor nach dem Stand der Technik,
- FIG 2: eine weitere Streulichtanordnung nach dem Stand der Technik mit zwei einfarbigen LED, mit einem einer der beiden LED nachgeschalteten Polarisator und mit einem Photosensor,
- FIG 3: eine beispielhafte Streulichtanordnung mit einer Zweifarben-LED, mit einem Photosensor und mit einem dem Photosensor vorgeschalteten wellenlängenselektiven Polarisator gemäss der Erfindung,
- FIG 4: ein Beispiel für eine Zweifarben-LED mit zwei auf einem Chip-Träger der Zweifarben-LED nebeneinander angeordneten LED-Chips,
- FIG 5: eine beispielhafte Verteilung von Testfeuern, offenem Feuer und Störgrössen aufgetragen über einen Quotient Q₀₁ aus senkrecht polarisiertem Infrarotlicht zu unpolarisiertem Infrarotlicht, über einen Quotienten Q₀₂ aus unpolarisiertem blauem zu unpolarisiertem infrarotem Licht sowie gemäss der Erfindung über einen ersten Quotienten Q1s aus senkrecht polarisiertem blauem zu unpolarisiertem infrarotem Licht, gemäss der Erfindung über einen zweiten Quotienten Q2p aus parallel polarisiertem blauem zu unpolarisiertem infrarotem Licht, jeweils bei einem Streuwinkel von 90°,und gemäss der Erfindung über einen dritten Quotienten Q3p aus parallel polarisiertem blauem zu unpolarisiertem infrarotem Licht bei einem Streuwinkel von 142°,
- FIG 6: eine beispielhafte Streulichtanordnung mit einer Zweifarben-LED, mit einem Photosensor und mit einem der Zweifarben-LED nachgeschaltetem wellenlängenselektiven Polarisator gemäss der Erfindung,
- FIG 7: eine beispielhafte Rückwärtsstreulichtanordnung aus einer Zweifarben-LED, einem Photosensor und aus einem der Zweifarben-LED nachgeschaltetem wellenlängenselektiven Polarisator gemäss der Erfindung,
- FIG 8: eine beispielhafte Rückwärtsstreulichtanordnung aus einer Zweifarben-LED, einem Photosensor und aus einem dem Photosensor vorgeschalteten wellenlängenselektiven Polarisator gemäss der Erfindung,
- FIG 9: eine kombinierte beispielhafte Streulichtanordnung aus einer gemeinsamen Zweifarben-LED, einem ersten Photosensor und einem zweiten Photosensor jeweils mit vorgeschaltetem wellenlängenselektiven Polarisator gemäss der Erfindung,
- FIG 10: eine zur Ausführungsform gemäss FIG 9 alternative Ausführungsform gemäss der Erfindung,
- FIG 11: eine kombinierte beispielhafte Streulichtanordnung aus einem gemeinsamen Photosensor, einer ersten Zweifarben-LED und einer zweiten Zweifarben-LED jeweils mit nachgeschaltetem wellenlängenselektivem Polarisator gemäss der Erfindung,
- FIG 12: eine zur Ausführungsform gemäss FIG 11 alternative Ausführungsform gemäss der Erfindung,
- FIG 13: ein Beispiel einer elektronischen Steuereinheit für einen erfindungsgemässen Streulichtrauchmelder zum Anschluss an (nur) einer Zweifarben-LED und an zwei Photosensoren, und
- FIG 14: ein Beispiel einer weiteren elektronischen Steuereinheit für einen erfindungsgemässen Streulichtrauchmelder zum Anschluss an einem Photosensor und an einer Zweifarben-LED.

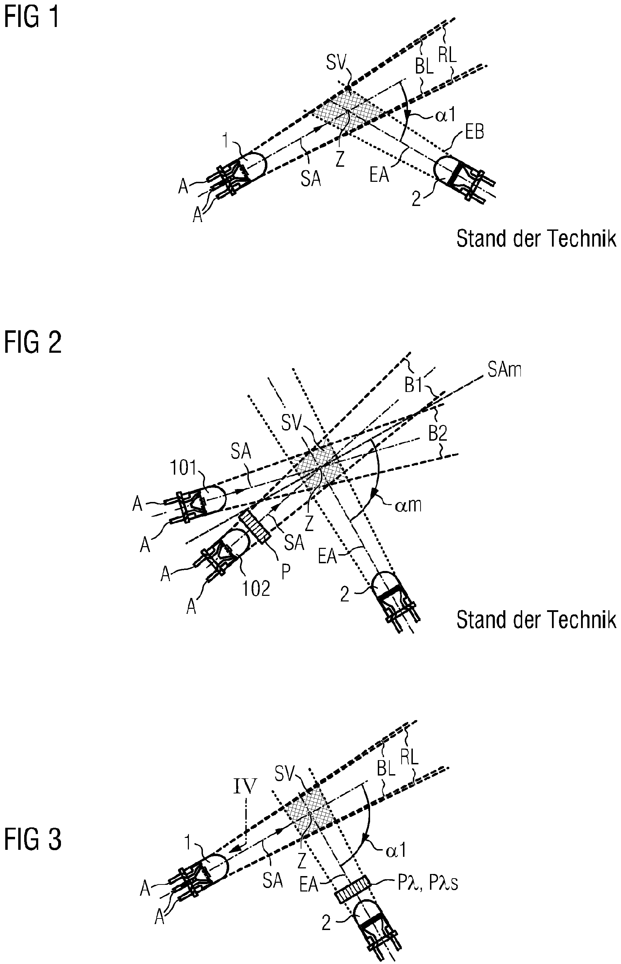

FIG 1 zeigt eine bekannte Streulichtanordnung mit einer Zweifarben-LED 1 und einem Photosensor 2. Die Zweifarben-LED 1 ist unter einem Streuwinkel α1 von 60° angeordnet. Mit A sind die Anschlusskontakte der Zweifarben-LED 1, mit BL ein von der Zweifarben-LED 1 emittiertes "blaues" Lichtbündel mit einer ersten Wellenlänge λ₁ und mit RL ein "rotes" Lichtbündel mit einer zweiten Wellenlänge λ₂ bezeichnet. Beide Lichtbündel BL, RL schneiden einen optischen Erfassungsbereich EB des Photosensors 2 in einem Streulichtvolumen SV bzw. Messvolumen. Mit Z ist ein Streulichtzentrum innerhalb des Streulichtvolumen SV bezeichnet, welches sich aus dem Schnittpunkt der optischen Sendeachse SA der Zweifarben-LED 1 und der optischen Empfangsachse EA des Photosensors 2 ergibt.

Wie die FIG 1 zeigt, ist das Streulichtvolumen SV aus zwei sich nicht vollständig überlagernden "blauen" und "roten" Teilstreulichtvolumen gebildet. Die geringen räumlichen Unterschiede sind in der benachbarten "schielenden" Anordnung zweier LED-Chips auf einem Chipträger der Zweifarben-LED für die Emission des blauen und roten Lichtbündels begründet.

FIG 2 zeigt eine weitere bekannte Streulichtanordnung mit zwei einfarbigen LEDs 101, 102, mit einem einer der LED 102 nachgeschalteten Polarisator P und mit einem Photosensor 2. Beide LED 101, 102 emittieren jeweils ein Lichtbündel B1, B2. Ihre optischen Sendeachsen SA sind zueinander geneigt und schneiden sich in einem Streulichtzentrum Z zusammen mit der optischen Empfangsachse EA des Photosensors 2. Im vorliegenden Beispiel liegt der Winkelversatz der beiden Sendeachsen SA - baulich bedingt durch ihre benachbarte Anordnung und durch den nachgeschalteten Polarisator P bei ca. 25°. Mit SAₘ ist eine mittlere optische Sendeachse für beide LED 101, 102 bezeichnet, die mit der Empfangsachse EA des Photosensors 2 einen mittleren Streuwinkel αm von ca. 90° bildet. Im gezeigten Beispiel ist der Polarisator P ein herkömmlicher Polarisator. Dessen Polarisationsebene verläuft senkrecht zu einer durch die optischen Achsen SA, EA aufgespannten Streuebene, d.h. senkrecht zur Bildebene der vorliegenden FIG 2.

FIG 3 zeigt eine beispielhafte Streulichtanordnung für einen Streulichtrauchmelder mit einer Zweifarben-LED 1, mit einem Photosensor 2 und mit einem diesem optisch vorgeschalteten wellenlängenselektiven Polarisator Pλ gemäss der Erfindung.

Der wellenlängenselektive lineare Polarisator Pλ weist dabei derartige optische Eigenschaften auf, dass das durch ihn hindurchtretende Licht in Abhängigkeit von dessen jeweiliger Wellenlänge λ₁, λ₂ unterschiedlich stark polarisiert wird. Damit ist insbesondere gemeint, dass das durch den Polarisator Pλ hindurchtretende Licht der ersten "blauen" Wellenlänge λ₁, d.h. das unpolarisiert einfallende, durch den Polarisator hindurchtretende Licht der ersten "blauen" Wellenlänge λ₁, zumindest teilweise polarisiert wird, während das hindurchtretende Licht der zweiten "roten" Wellenlänge λ₂, d.h. das unpolarisiert einfallende, durch den Polarisator hindurchtretende Licht der zweiten "roten" Wellenlänge λ₁, im Wesentlichen nicht, das heisst maximal 5%, polarisiert wird. Ein linearer Polarisator umfasst bekanntermassen eine Polarisationsebene, d.h. er bildet eine Polarisationsebene aus. In Verbindung mit der erfindungsgemässen Wellenlängenselektivität des Polarisators Pλ bedeutet dies, dass ein Anteil von mindestens 50%, insbesondere von mindestens 80%, von parallel zur Polarisationsebene des Polarisators polarisiertem Licht der ersten Wellenlänge λ₁ durch den Polarisator hindurchtritt. Dagegen gelangt lediglich ein Anteil von höchstens 5%, insbesondere von höchstens 1%, von senkrecht zur Polarisationsebene des Polarisators Pλ polarisierten Lichts der ersten Wellenlänge λ₁ durch den Polarisator Pλ.

Die Zweifarben-LED 1 ist dazu ausgebildet, Licht einer ersten Wellenlänge λ₁ in einem Bereich von 380 nm bis 570 nm, insbesondere von 470 nm ± 30 nm und/oder einer zweiten Wellenlänge λ₂ in einem Bereich von 750 nm bis 1100 nm, insbesondere von 940 nm ± 30 nm, auszusenden. Die Zweifarben-LED 1 kann ein Standard-Gehäuse mit einem Durchmesser von 3 mm oder von 5 mm aufweisen, oder in SMD-Technik ausgeführt sein. Der Photosensor 2 ist insbesondere eine Photodiode, insbesondere eine Silizium-Photodiode und vorzugsweise eine Silizium-PIN-Photodiode. Sie ist spektral zumindest auf die erste und zweite Wellenlänge λ₁, λ₂ abgestimmt.

Die Zweifarben-LED 1, der Photosensor 2 sowie der wellenlängenselektive Polarisator Pλ sind typischerweise auf einem Schaltungsträger des erfindungsgemässen Streulichtrauchmelders angeordnet. Auf dem Schaltungsträger ist vorzugsweise auch eine elektronische Steuereinheit, insbesondere ein Mikrocontroller, angeordnet. Die Steuereinheit ist elektrisch mit der Zweifarben-LED und mit dem Photosensor zur gepulsten Ansteuerung der Zweifarben-LED sowie zur messtechnischen Erfassung eines zeitlich zugeordneten Photosensorsignals und zur Auswertung eines jeweiligen Photosensorsignals auf Brandkenngrössen hin verbunden. In einem detektierten Brandfall ist die Steuereinheit dazu eingerichtet, einen Brandalarm optisch und/oder akustisch am Streulichtrauchmelder und/oder an eine übergeordnete Brandmeldezentrale auszugeben, wie z.B. über einen drahtgebundenen Melderbus oder über Funk.

Im vorliegenden Beispiel ist der erfindungsgemässe wellenlängenselektive lineare Polarisator Pλ optisch dem Photosensor 2 vorgeschaltet. Die Zweifarben-LED 1 und der Photosensor 2 sind einem Streuwinkel α1 von 90° angeordnet, der sich messtechnisch als besonders vorteilhaft herausgestellt hat.

Weiterhin gemäss der FIG 3 verläuft die Polarisationsebene des wellenlängenselektiven Polarisators Pλ senkrecht zu einer durch beide optischen Achsen SA, EA der Zweifarben-LED 1 und des Photosensors 2 aufgespannten Ebene. Der Polarisator Pλ kann somit auch als senkrechter Polarisator Pλs bezeichnet werden. Zudem ist die Polarisatorebene (d.h. die Ebene parallel zum scheiben- oder plattenförmigen Polarisator) dieses Polarisators Pλs etwa senkrecht zur Empfangsachse EA des Photosensors 2 angeordnet und ausgerichtet. Es wird in diesem Zusammenhang angemerkt, dass sich die beiden optischen Achsen SA, EA nicht notwendigerweise schneiden müssen. Es ist ausreichend, wenn beide optische Achsen SA, EA auf ein konstruktiv zu definierendes gemeinsamen Streulichtvolumen SV ausgerichtet sind. In einem solchen Fall ist die Polarisationsebene des Polarisators etwa senkrecht zur mittleren Streuebene von Licht aus der Zweifarben-LED, welches nach der Streuung an Aerosol den Empfänger erreicht, ausgerichtet.

Die gezeigte Anordnung mit dem "senkrechten" Polarisator Pλs hat sich als messtechnisch besonders vorteilhaft erwiesen. Dabei bewirkt die wellenlängenselektive Polarisation im Vergleich zu einer Streulichtanordnung ohne Polfilter, dass die sich sonst überlagernden Quotientenbereiche (siehe TF3 und OF des Quotienten Q₀₂ aus den Streustrahlungsintensitäten I_{λ1}, I_{λ2} in FIG 5) nun voneinander entfernen, so dass vorteilhaft eine zuverlässige Diskriminierung zwischen offenen Bränden und Schwelbränden bei gleichzeitiger Diskriminierung von Wasserdampf bzw. von Wassernebel möglich ist (siehe TF3 und OF des Quotienten Q1s in FIG 5).

FIG 4 zeigt ein Beispiel für eine Zweifarben-LED 1 mit zwei auf einem Chip-Träger TR der Zweifarben-LED 1 nebeneinander angeordneten LED-Chips R, B entlang der in FIG 3 eingezeichneten Blickrichtung IV. Die gezeigte Zweifarben-LED 1 weist ein an sich bekanntes Standard-Gehäuse auf, wie z.B. mit einem 5 mm-Durchmesser.

FIG 5 zeigt eine in einer Messreihe ermittelte Verteilung von Testfeuern TF2, TF3, von offenem Feuer OF sowie von Störgrössen H2O wie Wasserdampf oder Wassernebel aufgetragen über drei verschiedene Quotienten Q₀₁ₛ, Q₀₂, Q1s, Q2p und Q3p. Die beiden Testfeuer TF2, TF3 sind in der Norm EN54-7:2018 spezifiziert.

Der obere Teil der FIG 5 zeigt den Quotienten Q₀₁ₛ aus der Streulichtintensität von senkrecht polarisiertem Infrarotlicht zur Streulichtintensität von unpolarisiertem Infrarotlicht, jeweils mit einer Wellenlänge von 940 nm und jeweils unter einem Streuwinkel von 90°. Eine derartige Streulichtanordnung ist seit langem bekannt, wie z.B. aus der vorherigen FIG 4.

Der darunterliegende Teil der FIG 5 zeigt den Quotienten Q₀₂ aus der Streulichtintensität von unpolarisiertem "blauen" Streulicht der ersten Wellenlänge λ₁ bei 470 nm zur Streulichtintensität von unpolarisiertem infrarotem Streulicht der zweiten Wellenlänge λ₂ bei 940 nm jeweils unter einem Streuwinkel von 90°. Auch diese Streulichtanordnung ist seit langem bekannt.

Der mittlere Teil der FIG 5 zeigt den ersten Quotienten Q1s aus der Streulichtintensität von senkrecht polarisiertem "blauem" Streulicht der ersten Wellenlänge λ₁ bei 470 nm zur Streulichtintensität von unpolarisiertem infrarotem Streulicht der zweiten Wellenlänge λ₂ bei 940 nm gemäss dem Beispiel der FIG 3 und FIG 6 jeweils unter einem Streuwinkel von 90°.

Der nachfolgende Teil der FIG 5 zeigt den zweiten Quotienten Q2p aus der Streulichtintensität von parallel polarisiertem "blauem" Streulicht der ersten Wellenlänge λ₁ bei 470 nm zur Streulichtintensität von unpolarisiertem infrarotem Streulicht der zweiten Wellenlänge λ₂ bei 940 nm gemäss dem Beispiel der FIG 3 und FIG 6 jeweils unter einem Streuwinkel von 90°. Im vorliegenden Beispiel weist der weitere erste Quotientenbereich Werte für den zweiten Quotienten Q2p im Bereich von 0.5 ± 0.1 und der weitere zweite Quotientenbereich Werte im Bereich von 1.65 ± 0.4 auf.

Gemäss aktualisierten messtechnischen Untersuchungen umfasst der erste weitere Quotientenbereich einen Wert für den zweiten Quotienten Q2p im Bereich von 0.4 bis 0.8. Der zweite weitere Quotientenbereich umfasst einen Wert im Bereich von 1.2 bis 2.3. Die Werte der jeweiligen Quotientenbereiche sind dabei wiederum abhängig vom Streuwinkel sowie von der Ausrichtung der Polarisationsebene des Polarisators.

Schliesslich zeigt der untere Teil der FIG 5 den dritten Quotienten Q3p aus der Streulichtintensität von parallel polarisiertem "blauen" Streulicht der ersten Wellenlänge λ₁ bei 470 nm zur Streulichtintensität von unpolarisiertem infrarotem Streulicht der zweiten Wellenlänge λ₂ bei 940 nm gemäss dem Beispiel der FIG 7 und FIG 8 jeweils unter einem Streuwinkel von 142°. Im vorliegenden Beispiel weist der nochmals weitere erste Quotientenbereich Werte für den dritten Quotienten Q3p im Bereich von 0.3 ± 0.1 und der nochmals weitere zweite Quotientenbereich Werte im Bereich von 1.5 bis 3.5 auf.

Gemäss aktualisierten messtechnischen Untersuchungen umfasst der nochmals weitere erste Quotientenbereich einen Wert für den dritten Quotienten Q3p im Bereich von 0.25 bis 0.55 und der nochmals weitere zweite Quotientenbereich Werte im Bereich von 1.4 bis 3.7. Die Werte der jeweiligen Quotientenbereiche sind dabei wiederum abhängig vom Streuwinkel sowie von der Ausrichtung der Polarisationsebene des Polarisators.

FIG 6 zeigt eine beispielhafte Streulichtanordnung mit einer Zweifarben-LED 1, mit einem Photosensor 2 und mit einem der Zweifarben-LED 1 nachgeschaltetem wellenlängenselektiven Polarisator Pλ gemäss der Erfindung. Die gezeigte Streulichtanordnung unterscheidet sich von der Streulichtanordnung in der FIG 3 lediglich in der Positionierung des wellenlängenselektiven Polarisators Pλ. In messtechnischer Hinsicht sind beide Streulichtanordnungen äquivalent zueinander.

FIG 7 zeigt eine beispielhafte Rückwärtsstreulichtanordnung aus einer Zweifarben-LED 1, einem Photosensor 2 und aus einem der Zweifarben-LED 1 nachgeschaltetem wellenlängenselektiven Polarisator Pλ gemäss der Erfindung.

Im vorliegenden Beispiel ist der erfindungsgemässe wellenlängenselektive lineare Polarisator Pλ optisch der Zweifarben-LED 1 nachgeschaltet. Die Zweifarben-LED 1 und der Photosensor 2 sind in einem Streuwinkel α2 von 142°angeordnet. Weiterhin gemäss der FIG 7 verläuft die Polarisationsebene des wellenlängenselektiven Polarisators Pλ parallel zu einer durch beide optischen Achsen SA, EA der Zweifarben-LED 1 und des Photosensors 2 aufgespannten Ebene. Der Polarisator Pλ kann somit auch als paralleler Polarisator Pλp bezeichnet werden. Zudem ist die Polarisatorebene dieses Polarisators Pλp senkrecht zur Empfangsachse EA des Photosensors 2 angeordnet und ausgerichtet.

Die gezeigte Anordnung hat sich messtechnisch als besonders vorteilhaft herausgestellt. Hier wirkt sich der stark polarisierende Effekt von Wasserdampf bzw. Wassernebel auf das LED-Lichts der ersten Wellenlänge λ₁ aufgrund des Dipoleffekts von Wassermolekülen besonders signifikant auf das zur ersten Wellenlänge λ₁ zugeordnete Streulichtsignal aus. Dadurch lässt sich Wasserdampf sowie Wassernebel als einer der Hauptstörgrössen bei der optischen Rauchdetektion detektieren und ein möglicher Fehlalarm vorteilhaft vermeiden.

Es wird in diesem Zusammenhang wieder angemerkt, dass sich die beiden optischen Achsen SA, EA nicht notwendigerweise schneiden müssen. Es ist ausreichend, wenn beide optische Achsen SA, EA auf ein konstruktiv zu definierendes gemeinsamen Streulichtvolumen SV ausgerichtet sind.

FIG 8 zeigt eine beispielhafte Rückwärtsstreulichtanordnung aus einer Zweifarben-LED 1, einem Photosensor 2 und aus einem dem Photosensor 2 vorgeschalteten wellenlängenselektiven Polarisator Pλ gemäss der Erfindung. Die gezeigte Streulichtanordnung unterscheidet sich von der Streulichtanordnung in der FIG 7 lediglich in der Positionierung des wellenlängenselektiven Polarisators Pλ. In messtechnischer Hinsicht sind beide Streulichtanordnungen äquivalent zueinander.

FIG 9 zeigt eine kombinierte beispielhafte Streulichtanordnung aus einer gemeinsamen Zweifarben-LED 1, einem ersten Photosensor 21 und einem zweiten Photosensor 22 jeweils mit einem vorgeschalteten wellenlängenselektiven Polarisator Pλs, Pλp gemäss der Erfindung. Die gezeigte Streulichtanordnung ergibt sich dabei aus der Kombination der Streulichtanordnung gemäss FIG 3 mit der in FIG 8. Es ist die Zweifarben-LED 1 wiederum in einem ersten Streuwinkel α1 von 90° zum ersten Photosensor 21 und in einem zweiten Streuwinkel α2 von 142° zum zweiten Photosensor 22 angeordnet. Auch die beiden wellenlängenselektiven Polarisatoren Pλs, Pλp entsprechen bezüglich der Ausrichtung ihrer Polarisationsebene die der jeweiligen in FIG 3 bzw. FIG 8 gezeigten.

Die in FIG 9 gezeigte Streulichtanordnung für einen Streulichtrauchmelder gemäss der Erfindung vereinigt beide Vorteile aus den Streulichtanordnungen gemäss FIG 3 und FIG 8, verbunden mit einer guten Diskriminierung von offenem Feuer gegenüber dem Testfeuer TF3 (Glimmbrand Baumwolle) sowie mit einer sehr guten Störgrössenunterdrückung von Wasserdampf und Wassernebel.

FIG 10 zeigt eine weitere kombinierte beispielhafte Streulichtanordnung aus einer gemeinsamen Zweifarben-LED 1, einem ersten Photosensor 21 und einem zweiten Photosensor 22. Im Vergleich zur vorherigen Ausführungsform fehlen die den beiden Photosensoren 21, 22 optisch vorgeschalteten wellenlängenselektiven Polarisatoren Pλs, Pλp. Stattdessen wird der gemeinsamen Zweifarben-LED 1 optisch ein solcher Polarisator Pλp gemäss der Erfindung nachgeschaltet. Vorzugsweise verläuft die Polarisationsebene des wellenlängenselektiven Polarisators Pλp, wie in FIG 10 gezeigt, parallel zu einer durch die optische Achse SA der Zweifarben-LED 1 und durch die beiden optischen Achsen EA1, EA1 der beiden Photosensors 21, 22 aufgespannten Ebene. Der Polarisator Pλ kann somit auch als paralleler Polarisator Pλp bezeichnet werden. Zudem ist die Polarisatorebene dieses parallelen Polarisators Pλp senkrecht zur Sendeachse SA der Zweifarben-LED 1 angeordnet und ausgerichtet.

FIG 11 zeigt eine kombinierte beispielhafte Streulichtanordnung aus einem gemeinsamen Photosensor 2, einer ersten Zweifarben-LED 11 und einer zweiten Zweifarben-LED 12 jeweils mit einem nachgeschalteten wellenlängenselektiven Polarisator Pλs, Pλp gemäss der Erfindung. Die gezeigte Streulichtanordnung ergibt sich dabei aus der Kombination der Streulichtanordnung gemäss FIG 6 mit der in FIG 7. Es ist der Photosensor 2 wiederum in einem ersten Streuwinkel α1 von 90° zur ersten Zweifarben-LED 11 und in einem zweiten Streuwinkel α2 von 142° zur zweiten Zweifarben-LED 12 angeordnet. Auch die beiden wellenlängenselektiven Polarisatoren Pλs, Pλp entsprechen bezüglich der Ausrichtung ihrer Polarisationsebene die der jeweiligen in FIG 6 bzw. FIG 7 gezeigten.

FIG 12 zeigt eine weitere kombinierte beispielhafte Streulichtanordnung aus einem gemeinsamen Photosensor 2, einer ersten Zweifarben-LED 11 und einer zweiten Zweifarben-LED 12. Im Vergleich zur vorherigen Ausführungsform fehlen die beiden den Zweifarben-LED 11, 12 optisch nachgeschalteten wellenlängenselektiven Polarisatoren Pλs, Pλp. Anstelle dessen ist dem gemeinsamen Photosensor 2 ein solcher wellenlängenselektiver Polarisator Pλp optisch vorgeschaltet. Vorzugsweise verläuft die Polarisationsebene des wellenlängenselektiven Polarisators Pλp wie in FIG 12 gezeigt, parallel zu einer durch die beiden optischen Achse SA1, SA2 der beiden Zweifarben-LED 11, 12 und durch die optische Achse EA des gemeinsamen Photosensors 2 aufgespannten Ebene. Der Polarisator Pλ kann somit auch als paralleler Polarisator Pλp bezeichnet werden.

Zudem ist die Polarisatorebene dieses parallelen Polarisators Pλp senkrecht zur Empfangsachse EA des Photosensors 2 angeordnet und ausgerichtet.

In messtechnischer Hinsicht sind die gezeigten kombinierten Streulichtanordnungen gemäss FIG 9 und FIG 11 einerseits sowie die gezeigten kombinierten Streulichtanordnungen gemäss FIG 10 und FIG 12 andererseits jeweils äquivalent zueinander. Somit ergeben sich dieselben zuvor beschriebenen Vorteile.

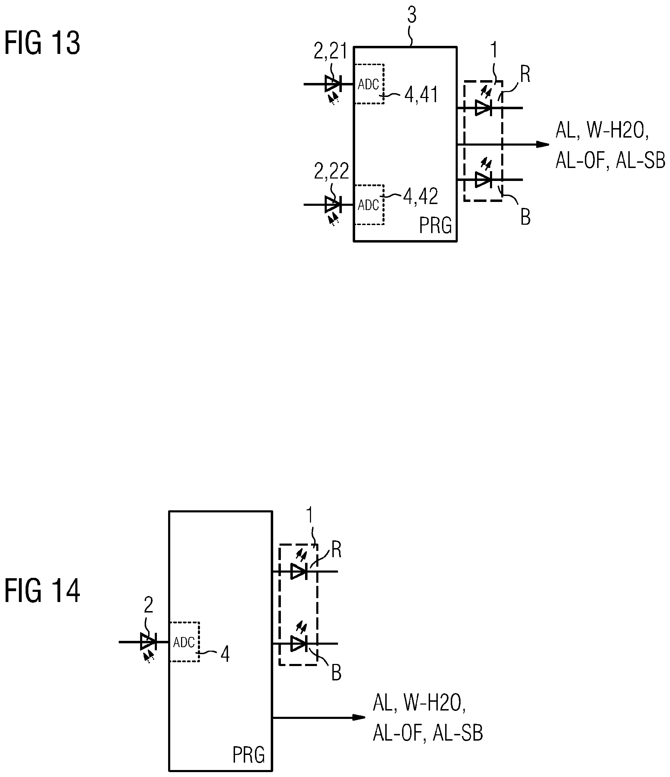

FIG 13 zeigt ein Beispiel einer elektronischen Steuereinheit 3 für einen erfindungsgemässen Streulichtrauchmelder zum Anschluss an (nur) einer Zweifarben-LED 1 und an beispielhaft zwei Photosensoren 21, 22. Mit B ist der erste LED-Chip der Zweifarben-LED 1 für die Aussendung von Licht der ersten Wellenlänge λ₁ bezeichnet und mit R der zweite LED-Chip für die Aussendung von Licht der zweiten Wellenlänge λ₂. Bei der gezeigten prozessorgestützten Steuereinheit 3 handelt es sich um einen Mikrocontroller, der bereits zwei integrierte A/D-Umsetzer 41, 42 zur Umsetzung eines analogen Photosensorsignals vom jeweiligen Photosensor 21, 22 in entsprechende Digitalwerte aufweist. Mit PRG ist ein Softwareprogramm bezeichnet, welches auf dem Mikrocontroller 3 ausführbar ist und geeignete Programmschritte aufweist, um die beiden LED-Chips B, R gepulst anzusteuern, ein entsprechend zeitlich zugeordnetes digitalisiertes Photosensorsignal zu erfassen und dieses bei der Brandalarmierung AL mit zu berücksichtigen. Für die Alarmierung weist der Mikrocontroller 3 einen entsprechenden Signalausgang auf. Das Softwareprogramm PRG kann zudem geeignete Programmschritte aufweisen, um alternativ oder zusätzlich zur Ausgabe eines Brandalarms AL einen Brandalarm für offenes Feuer AL-OF, einen Brandalarm für Schwelbrand AL-SB auszugeben. Darüber hinaus kann das Softwareprogramm PRG geeignete Programmschritte aufweisen, um eine Warnmeldung W-H2O für Wasserdampf oder Wassernebel als Störgrösse auszugeben.

Schliesslich zeigt FIG 14 ein Beispiel einer weiteren elektronischen Steuereinheit 3 für einen erfindungsgemässen Streulichtrauchmelder zum Anschluss an (nur) einem Photosensor 2 und an (nur) einer Zweifarben-LED 1. Mit dem Bezugszeichen 4 ist wieder ein A/D-Umsetzer 4 zur Umsetzung eines analogen Photosensorsignals in entsprechende Digitalwerte bezeichnet.

### Bezugszeichenliste

- 1, 11, 12: Zweifarben-LED, Dual-LED
- 2, 21, 22: Photosensor, Photodiode, Silizium-PIN-Photodiode
- 3: Steuereinheit, Mikrocontroller, Mikrocomputer
- 4, 41, 42: Analog-/Digitalumsetzer
- 101, 102: monochrome Leuchtdiode, Einfarben-LED

- α1: Streuwinkel
- α2: Rückwärtsstreuwinkel
- αm: mittlerer Streuwinkel
- A: Anschlüsse, Anschlusskontakte
- AL: Alarmmeldung, Brandalarm, Feueralarm
- AL-SB: Brandmeldung für Schwelbrand
- AL-OF: Brandmeldung für offenes Feuer
- B: blauleuchtende LED, LED-Chip
- BL, B1, B2: blaues Lichtbündel, blaues Licht
- EA, EA1, EA2: Empfangsachse, optische Achse des Photosensors
- EB: optischer Empfangsbereich
- F_{TF2}: erster Quotientenbereich für Testfeuer 2
- F_{TF3}: zweiter Quotientenbereich für Testfeuer 3
- F_{OF}: dritter Quotientenbereich für offenes Feuer
- F_{H2O}: vierter Quotientenbereich für Wasserdampf
- H2O: Wasserdampf
- OF: offenes Feuer
- P: wellenlängenunabhängiger Polarisator
- Pλ, Pλs, Pλp: wellenlängenselektiver Polarisator
- PRG: Computerprogramm
- R: infrarotleuchtende LED, LED-Chip
- RL, R1, R2: infrarotes Lichtbündel, rotes Licht
- SA, SA1, SA2: Sendeachse, optische Achse der Zweifarben-LED
- SAm: mittlere Sendeachse
- SV: Streulichtvolumen, Streuzentrum, Messvolumen
- TF2: Testfeuer 2
- TF3: Testfeuer 3
- TR: Chipträger
- W-H2O: Warnmeldung, Warnmeldung für detektierten Wasserdampf
- Z: optisches Zentrum

## Patentansprüche

1. Streulichtrauchmelder, welcher eine Zweifarben-LED (1) zum Aussenden von Licht einer ersten und einer zweiten Wellenlänge λ₁, λ₂ und einen spektral darauf abgestimmten Photosensor (2), die eine Streulichtanordnung bilden, sowie eine Steuereinheit (3) aufweist, wobei die Steuereinheit (3) mit der Zweifarben-LED (1) und mit dem Photosensor (2) verbunden ist und dazu eingerichtet ist, die Zweifarben-LED (1) zum Aussenden von Licht der ersten oder zweiten Wellenlänge λ₁, λ₂ anzusteuern, ein Photosensorsignal des Photosensors (2) zu erfassen, eine der ersten und zweiten Wellenlänge λ₁, λ₂ zugeordnete erste und zweite Streustrahlungsintensität I_{λ1}, I_{λ2} auf Basis des Photosensorsignals zu bestimmen und die erste und zweite Streustrahlungsintensitäten I_{λ1}, I_{λ2} bei der Brandalarmierung (AL) mit zu berücksichtigen, **dadurch gekennzeichnet, dass** der Streulichtrauchmelder einen wellenlängenselektiven Polarisator (Pλ) aufweist, welcher optisch dem Photosensor (2) vorgeschaltet oder der Zweifarben-LED (1) nachgeschaltet ist, wobei der wellenlängenselektive Polarisator (Pλ) derartige optische Eigenschaften aufweist, dass das durch den wellenlängenselektiven Polarisator (Pλ) hindurchtretende Licht in Abhängigkeit von dessen jeweiliger Wellenlänge λ₁, λ₂ unterschiedlich stark polarisiert wird.

2. Streulichtrauchmelder nach Anspruch 1, wobei der Polarisator (Pλ) derartige optische Eigenschaften aufweist, dass das durch den Polarisator (Pλ) hindurchtretende Licht der ersten Wellenlänge λ₁ zumindest teilweise polarisiert wird, während das hindurchtretende Licht der zweiten Wellenlänge λ₂ im Wesentlichen nicht polarisiert wird.

3. Streulichtrauchmelder nach Anspruch 2, wobei der Polarisator (Pλ) derartige optische Eigenschaften aufweist, dass das durch den Polarisator (Pλ) hindurchtretende Licht der zweiten Wellenlänge λ₂ einen Polarisationsgrad von maximal 0.05 aufweist.

4. Streulichtrauchmelder nach Anspruch 2 oder 3, wobei der Polarisator (Pλ) eine Polarisationsebene umfasst sowie derartige optische Eigenschaften aufweist, dass ein Anteil von mindestens 50%, insbesondere von mindestens 80%, von parallel zur Polarisationsebene des Polarisators (Pλ) polarisiertem Licht der ersten Wellenlänge λ₁ durch den Polarisator (Pλ) hindurchtritt, während ein Anteil von höchstens 5%, insbesondere von höchstens 1%, von senkrecht zur Polarisationsebene des Polarisators polarisiertem Licht der ersten Wellenlänge λ₁ durch den Polarisator (Pλ) hindurchtritt.

5. Streulichtrauchmelder nach einem der vorherigen Ansprüche, wobei der Polarisator (Pλ) ein wellenlängenselektiver linearer Polarisator ist, und wobei der Polarisator (Pλ) ein aus einer Polymerfolie, insbesondere aus einer Polyvinylalkoholfolie mit eindiffundiertem Jod hergestellter Polarisator, ein Drahtgitter-Polarisator oder ein Dye-Type-Polarisator ist.

6. Streulichtrauchmelder nach einem der Ansprüche 1 bis 5, wobei die Zweifarben-LED (1) unter einem ersten Streuwinkel (α1) von 45° bis 135°, insbesondere von 60° bis 120° und vorzugsweise von 90° ± 5°, zum Photosensor (2) angeordnet ist, wobei die Zweifarben-LED (1) und der Photosensor (2) auf ein gemeinsames Streulichtvolumen (SV) ausgerichtet sind, wobei der Polarisator (Pλs) ein linearer Polarisator ist, wobei der Polarisator (Pλs) optisch entweder dem Photosensor (2) vorgeschaltet oder der Zweifarben-LED (1) nachgeschaltet ist, und wobei der Polarisator (Pλs) derart ausgerichtet ist, dass dessen Polarisationsebene einen Winkel von 90° ± 5° mit einer durch die optischen Achsen (SA, EA) der Zweifarben-LED (1) und des Photosensors (2) aufgespannten Ebene einschliesst.

7. Streulichtrauchmelder nach Anspruch 6, wobei die Steuereinheit (3) dazu eingerichtet ist,
- aus den beiden Streustrahlungsintensitäten I_{λ1}, I_{λ2} einen ersten Quotienten Q1s zu ermitteln,
- einen Brandalarm (AL) oder Schwelbrandalarm (AL-SB) auszugeben, falls der erste Quotient Q1s innerhalb eines ersten oder zweiten Quotientenbereichs (F_{TF2}, F_{TF3}) liegt, oder
- einen Brandalarm (AL) oder Brandalarm für offenes Feuer (AL-OF) auszugeben, falls der erste Quotient Q1s innerhalb eines dritten Quotientenbereichs (F_{OF}) liegt.

8. Streulichtrauchmelder nach Anspruch 6 oder 7, wobei die Steuereinheit (3) dazu eingerichtet ist,
- aus den beiden Streustrahlungsintensitäten I_{λ1}, I_{λ2} einen ersten Quotienten Q1s zu ermitteln, und
- eine Ausgabe eines Brandalarms (AL) zu unterbinden und/oder eine Warnmeldung (W-H2O) für detektierten Wasserdampf oder Wassernebel im Streulichtvolumen (SV) auszugeben, falls der erste Quotient Q1s innerhalb eines vierten Quotientenbereichs (F_{H2O}) liegt.

9. Streulichtrauchmelder nach Anspruch 7 oder 8, wobei für einen jeweiligen Wertebereich der Quotientenbereiche (F_{H2O} ,F_{TF2}, F_{TF3}, F_{OF}) gilt:
Quotientenwerte des vierten Quotientenbereichs (F_{H2O}) <
Quotientenwerte des ersten Quotientenbereichs (F_{TF2}) <
Quotientenwerte des zweiten Quotientenbereichs (F_{TF3}) <
Quotientenwerte des dritten Quotientenbereichs (F_{OF}).

10. Streulichtrauchmelder nach einem der Ansprüche 1 bis 5, wobei der Streulichtrauchmelder anstelle des einen Photosensors (2) einen ersten und zweiten Photosensor (21, 22) aufweist, wobei die Zweifarben-LED (1) unter einem ersten Streuwinkel (α1) von 45° bis 135°, insbesondere von 60° bis 120° und vorzugsweise von 90° ± 5°, zum ersten Photosensor (21) angeordnet ist, wobei die Zweifarben-LED (1) unter einem zweiten Streuwinkel (α2) von 142° ± 5°, vorzugsweise von 142° ± 1°, zum zweiten Photosensor (22) angeordnet ist, wobei die Zweifarben-LED (1) und die beiden Photosensoren (21, 22) auf ein gemeinsames Streulichtvolumen (SV) ausgerichtet sind, wobei der Zweifarben-LED (1) optisch ein Polarisator (Pλp) nachgeschaltet ist, der das jeweilige hindurchtretende, von der Zweifarben-LED (1) ausgesendete Licht in Abhängigkeit von dessen jeweiliger Wellenlänge λ₁, λ₂ unterschiedlich stark polarisiert, wobei die Steuereinheit (3) mit der Zweifarben-LED (1) und den beiden Photosensoren (21, 22) verbunden ist und dazu eingerichtet ist, die Zweifarben-LED (1) zum Aussenden von Licht der ersten oder zweiten Wellenlänge λ₁, λ₂ anzusteuern, je ein Photosensorsignal der beiden Photosensoren (21, 22) zu erfassen, jeweils eine erste und zweite Streustrahlungsintensität I_{λ11}, I_{λ12}; I_{λ21}, I_{λ22} für die erste und zweite Wellenlänge λ₁, λ₂ auf Basis des jeweiligen Photosensorsignals zu bestimmen und die jeweiligen ersten und zweiten Streustrahlungsintensitäten I_{λ11}, I_{λ12}; I_{λ21}, I_{λ22} bei der Brandalarmierung (AL) mit zu berücksichtigen.

11. Streulichtrauchmelder nach einem der Ansprüche 1 bis 5, wobei der Streulichtrauchmelder anstelle der einen Zweifarben-LED (1) eine erste und zweite Zweifarben-LED (11, 12) aufweist, wobei der Photosensor (2) unter einem ersten Streuwinkel (α1) im Bereich von 45° bis 135°, insbesondere von 60° bis 120° und vorzugsweise von 90° ± 5°, zur ersten Zweifarben-LED (11) angeordnet ist, wobei der Photosensor (2) unter einem zweiten Streuwinkel (α2) von 142° ± 5°, vorzugsweise von 142° ± 1°, zur zweiten Zweifarben-LED (12) angeordnet ist, wobei der Photosensor (2) und die beiden Zweifarben-LED (11, 12) auf ein gemeinsames Streulichtvolumen (SV) ausgerichtet sind, wobei dem Photosensor (2) optisch ein Polarisator (Pλp) vorgeschaltet ist, der das jeweilige hindurchtretende Licht in Abhängigkeit von dessen jeweiliger Wellenlänge λ₁, λ₂ unterschiedlich stark polarisiert, wobei die Steuereinheit (3) mit dem Photosensor (2) und den beiden Zweifarben-LED (11, 12) verbunden ist und dazu eingerichtet ist, die beiden Zweifarben-LED (11, 12) jeweils zum Aussenden von Licht der ersten oder zweiten Wellenlänge λ₁, λ₂ anzusteuern, ein Photosensorsignal des Photosensors (2) zu erfassen, jeweils eine erste und zweite Streustrahlungsintensität I_{λ11}, I_{λ12}; I_{λ21}, I_{λ22} für die erste und zweite Wellenlänge λ₁, λ₂ auf Basis der jeweils angesteuerten Zweifarben-LED (11, 12) zu bestimmen und die jeweiligen ersten und zweiten Streustrahlungsintensitäten I_{λ11}, I_{λ12}; I_{λ21}, I_{λ22} bei der Brandalarmierung (AL) mit zu berücksichtigen.

12. Streulichtrauchmelder nach Anspruch 10 oder 11, wobei der Polarisator (Pλp) ein linearer Polarisator ist und derart ausgerichtet ist, dass dessen Polarisationsebene einen Winkel von 0° ± 5° mit einer durch die optische Achse (SA, EA) der Zweifarben-LED (1) oder des Photosensors (2) aufgespannten Ebene einschliesst.

13. Streulichtrauchmelder nach einem der Ansprüche 10, 11 oder 12, wobei die Steuereinheit (3) dazu eingerichtet ist,
- aus der dem ersten Streuwinkel (α1) zugeordneten ersten und zweiten Streustrahlungsintensität I_{λ11}, I_{λ12} einen zweiten Quotienten Q2p zu ermitteln,
- aus der dem zweiten Streuwinkel (α2) zugeordneten ersten und zweiten Streustrahlungsintensität I_{λ21}, I_{λ22} einen dritten Quotienten Q3p zu ermitteln,
- einen Brandalarm (AL) und/oder Schwelbrandalarm (AL-SB) auszugeben, falls der zweite Quotient Q2p innerhalb des weiteren zweiten Quotientenbereichs liegt, oder
- einen Brandalarm (AL) auszugeben, falls der dritte Quotient Q3p innerhalb des nochmals weiteren zweiten Quotientenbereichs liegt, und
- eine Ausgabe eines Brandalarms (AL) zu unterbinden und/oder eine Warnmeldung (W-H2O) für detektierten Wasserdampf oder Wassernebel im Streulichtvolumen (SV) auszugeben, falls der zweite Quotient Q2p innerhalb des weiteren ersten Quotientenbereichs und/oder der dritte Quotient Q3p innerhalb des nochmals weiteren ersten Quotientenbereichs liegt.

14. Streulichtrauchmelder nach Anspruch 6, wobei die Steuereinheit (3) dazu eingerichtet ist, die dem ersten Streuwinkel (α1) zugeordneten ersten und zweiten Streustrahlungsintensitäten I_{λ11}, I_{λ12} dahingehend zu normieren, dass der erste Quotient Q1s und/oder der zweite Quotient Q2p für im Streulichtvolumen (SV) eingebrachte Streuteilchen mit einem vorgegebenen mittleren Durchmesser im Bereich von 0.5 bis 1.5 µm einen Quotientenwert im Bereich von 1 bis 3, insbesondere einen Quotientenwert von 2, aufweist, und/oder wobei die Steuereinheit (3) dazu eingerichtet ist, die dem zweiten Streuwinkel (α2) zugeordneten ersten und zweiten Streustrahlungsintensitäten I_{λ21}, I_{λ22} dahingehend zu normieren, dass der dritte Quotient Q3p für im Streulichtvolumen (SV) eingebrachte Streuteilchen mit einem vorgegebenen mittleren Durchmesser im Bereich von 0.5 bis 1.5 µm einen Quotientenwert im Bereich von 1 bis 3, insbesondere einen Quotientenwert von 2, aufweist.

15. Verwendung eines wellenlängenselektiven Polarisators (Pλ) bei der optischen Streulichtrauchdetektion nach dem Zweifarbenprinzip mit einer Zweifarben-LED (1) und einem spektral darauf abgestimmten Photosensor (2), die eine Streulichtanordnung bilden, wobei der wellenlängenselektive Polarisator optisch dem Photosensor (2) vorgeschaltet oder der Zweifarben-LED (1) nachgeschaltet ist, sodass ein bei der Rauchdetektion durch die Zweifarben-LED ausgesandtes monochromes Licht einer ersten Wellenlänge λ₁ und ein ausgesandtes monochromes Licht einer zweiten Wellenlänge λ₂ mittels des wellenlängenselektiven Polarisators (Pλ) unterschiedlich stark polarisiert wird.

## Claims

1. Scattered light smoke detector comprising a two-color LED (1) for emitting light of a first and a second wavelength λ₁, λ₂, a spectrally matched photosensor (2) forming a scattered light arrangement, and a control unit (3), the control unit (3) being connected to the two-color LED (1) and to the photosensor (2) and being arranged to drive the two-color LED (1) to emit light of the first or second wavelength λ₁, λ₂ detecting a photosensor signal from the photosensor (2), determining first and second scattered light intensities I_{λ1}, I_{λ2} associated with the first and second wavelengths λ₁, λ₂ based on the photosensor signal, and including the first and second scattered light intensities I_{λ1}, I_{λ2} in the event of a fire alarm (AL) **characterised in that** the scattered light smoke detector comprises a wavelength-selective polariser, which is optically connected upstream of the photosensor (2) or to the two-color LED (1), the wavelength-selective polariser (PA) having optical properties such that the light passing through the wavelength-selective polariser (PA) is polarised at different intensities in dependence upon the respective wavelength λ₁, λ₂ of said light.

2. Scattered light smoke detector according to claim 1,
wherein the polariser (Pλ) has optical properties such that the light of the first wavelength λ₁ that is passing through the polariser (Pλ) is at least in part polarised while the light of the second wavelength λ₂ that is passing through is essentially not polarised.

3. Scattered light smoke detector according to claim 2,
wherein the polariser (Pλ) has optical properties such that the light of the second wavelength λ₂ that is passing through the polariser (Pλ) has a maximum degree of polarisation of 0.05.

4. Scattered light smoke detector according to claim 2 or 3, wherein the polariser (Pλ) comprises a polarisation plane and also has optical properties such that a proportion of at least 50%, in particular at least 80%, of the light of the first wavelength λ₁ that is polarised parallel to the polarisation plane of the polariser (Pλ) passes through the polariser (Pλ), while a proportion of at most 5%, in particular at most 1%, of light of the first wavelength λ₁ that is polarised perpendicular to the polarisation plane of the polariser passes through the polariser (Pλ).

5. Scattered light smoke detector according to one of the preceding claims, wherein the polariser (Pλ) is a wavelength-selective linear polariser, and wherein the polariser (Pλ) is a polariser produced from a polymer film, in particular from a polyvinyl alcohol film having diffused iodine; a wire mesh polariser or a dye type polariser.

6. Scattered light smoke detector according to one of claims 1 to 5, wherein the two-colour LED (1) is arranged at a first scatter angle (α1) of 45° to 135°, in particular of 60° to 120° and preferably of 90° ± 5°, with respect to the photosensor (2), wherein the two-colour LED (1) and the photosensor (2) are oriented towards a common scattered light volume (SV), wherein the polariser (Pλs) is a linear polariser, wherein the polariser (Pλs) is optically connected either upstream of the photosensor (2) or downstream of the two-colour LED (1), and wherein the polariser (Pλs) is oriented in such a manner that its polarisation plane includes an angle of 90° ± 5° having a plane that is spanned by the optical axes (SA, EA) of the two-colour LED (1) and the photosensor (2).

7. Scattered light smoke detector according to claim 6,
wherein the control unit (3) is configured for the purpose of:
- determining a first quotient Q1s of the two scattered radiation intensities I_{λ1}, I_{λ2},
- outputting a fire alarm (AL) or a smouldering fire alarm (AL-SB) if the first quotient Q1s is within a first or second quotient range (F_{TF2}, F_{TF3}), or
- outputting a fire alarm (AL) or a fire alarm for an open fire (AL-OF) if the first quotient Q1s is within a third quotient range (F_{OF}).

8. Scattered light smoke detector according to claim 6 or 7, wherein the control unit (3) is configured for the purpose of:
- determining a first quotient Q1s of the two scattered radiation intensities I_{λ1}, I_{λ2}, and
- suppressing an output of a fire alarm (AL) and/or for the purpose of outputting a warning message (W-H2O) for detected water vapour or water mist in the scattered light volume (SV) if the first quotient Q1s is within a fourth quotient range (F_{H2O}) .

9. Scattered light smoke detector according to claim 7 or 8, wherein for a respective value range of the quotient ranges (F_{H2O}, F_{TF2}, F_{TF3}, F_{OF}) the following applies:
quotient values of the fourth quotient range (F_{H2O})<
quotient values of the first quotient range (F_{TF2})<
quotient values of the second quotient range (F_{TF3})<
quotient values of the third quotient range (F_{OF}).

10. Scattered light smoke detector according to one of claims 1 to 5, wherein in lieu of the one photosensor (2), the scattered light smoke detector has a first and second photosensor (21, 22), wherein the two-colour LED (1) is arranged at a first scatter angle (α1) of 45° to 135°, in particular of 60° to 120° and preferably of 90° ± 5°, with respect to the first photosensor (21), wherein the two-colour LED (1) is arranged at a second scatter angle (α2) of 142° ± 5°, preferably of 142° ± 1°, with respect to the second photosensor (22), wherein the two-colour LED (1) and the two photosensors (21, 22) are oriented towards a common scattered light volume (SV), wherein a polariser (Pλp) is optically connected downstream of the two-colour LED (1) and, in dependence upon the respective wavelength λ₁, λ₂ of the respective light that is passing through, emitted by the two-colour LED (1), said polariser polarises said light at different intensities, wherein the control unit (3) is connected to the two-colour LED (1) and to the two photo sensors (21, 22) and is configured for the purpose of actuating the two-colour LED (1) respectively so as to emit light of the first or second wavelength λ₂, λ₂, for the purpose of detecting respectively a photosensor signal of the two photosensors (21, 22), for the purpose of determining respectively a first and second scattered radiation intensity I_{λ11}, I_{λ12}; I_{λ21}, I_{λ22} for the first and second wavelength λ₂, λ₂ on the basis of the respective photosensor signal for the purpose of taking into account the respective first and second scattered radiation intensities I_{λ11}, I_{λ12}; I_{λ21}, I_{λ22} in the event of a fire alarm (AL) .

11. Scattered light smoke detector according to one of claims 1 to 5, wherein in lieu of the one two-colour LED (1), the scattered light smoke detector has a first and second two-colour LED (11, 12), wherein the photosensor (2) is arranged at a first scatter angle (α1) in the range of 45° to 135°, in particular of 60° to 120° and preferably of 90° ± 5°, with respect to the first two-colour LED (11), wherein the photosensor (2) is arranged at a second scatter angle (α2) of 142° ± 5°, preferably of 142° ± 1°, with respect to the second two-colour LED (12), wherein the photosensor (2) and the two two-colour LEDs (11, 12) are oriented towards a common scattered light volume (SV), wherein a polariser (Pλp) is optically connected upstream of the photosensor (2) and, in dependence upon the respective wavelength λ₁, λ₂ of the respective light that is passing through, said polariser polarises said light at different intensities, wherein the control unit (3) is connected to the photosensor (2) and to the two two-colour LEDs (11, 12) and is configured for the purpose of actuating the two two-colour LEDs (11, 12) respectively so as to emit light of the first or second wavelength λ₂, λ₂, for the purpose of detecting a photosensor signal of the photosensor (2), for the purpose of determining respectively a first and second scattered radiation intensity I_{λ11}, I_{λ12}; I_{λ21}, I_{λ22} for the first and second wavelength λ₁, λ₂ on the basis of the respective actuated two-colour LED (11, 12) and for the purpose of taking into account the respective first and second scattered radiation intensities I_{λ11}, I_{λ12}; I_{λ21}, I_{λ22} in the event of a fire alarm (AL) .

12. Scattered light smoke detector according to claim 10 or 11, wherein the polariser (Pλp) is a linear polariser and is oriented in such a manner that its polarisation plane includes an angle of 0° + 5° with a plane that is spanned by the optical axis (SA, EA) of the two-colour LED (1) or the photosensor (2).

13. Scattered light smoke detector according to one of claims 10, 11 or 12, wherein the control unit (3) is configured for the purpose of:
- determining a second quotient Q2p of the first and second scattered radiation intensity I_{λ11}, I_{λ12} that are allocated to the first scatter angle (α1),
- determining a third quotient Q3p of the first and second scattered radiation intensity I_{λ21}, I_{λ22} that are allocated to the second scatter angle (α2),
- outputting a fire alarm (AL) and/or smouldering fire alarm (AL-SB) if the second quotient Q2p is within the further second quotient range, or
- outputting a fire alarm (AL) if the third quotient Q3p is within the yet further second quotient range, and
- suppressing an output of a fire alarm (AL) and/or for the purpose of outputting a warning message (W-H2O) for detected water vapour or water mist in the scattered light volume (SV) if the second quotient Q2p is within the further first quotient range and/or if the third quotient Q3p is within the yet further first quotient range.

14. Scattered light smoke detector according to claim 6,
wherein the control unit (3) is configured for the purpose of standardising the first and second scattered radiation intensities I_{λ11}, I_{λ12} that are allocated to the first scatter angle (α1) to such an extent that the first quotient Q1s and/or the second quotient Q2p for scattered particles that are introduced into the scattered light volume (SV) and that have a predetermined average diameter in the range of 0.5 to 1.5 um has a quotient value in the range of 1 to 3, in particular a quotient value of 2, and/or wherein the control unit (3) is configured for the purpose of standardising the first and second scattered light intensities I_{λ21}, I_{λ22} that are allocated to the second scatter angle (α2) to such an extent that the third quotient Q3p for scattered particles that are introduced into the scattered light volume (SV) and that have a predetermined average diameter in the range of 0.5 to 1.5 um has a quotient value in the range of 1 to 3, in particular a quotient value of 2.

15. Use of a wavelength-selective polariser (Pλ) in optical scattered light smoke detection according to the two-colour principle with a two-colour LED (1) and a photosensor (2), which is spectrally matched with said two-colour LED, which photosensor and LED form a scattered light arrangement, wherein the wavelength-selective polariser is optically connected upstream of the photosensor (2) or downstream of the two-colour LED (1), such that a monochrome light of a first wavelength λ₁ and a monochrome light of a second wavelength λ₂ that is emitted by the two-colour LED for smoke detection is polarised at different intensities by means of the wavelength-selective polariser (Pλ).

## Revendications

1. Détecteur de fumée à lumière diffusée comportant une LED bicolore (1) pour l'émission de lumière d'une première et d'une seconde longueur d'onde λ₂, λ₂ et un photocapteur (2) spectralement adapté à celle-ci, qui forment un agencement de lumière diffusée, et une unité de commande (3), dans lequel l'unité de commande est connectée à la LED bicolore (1) et au photocapteur (2) et est configurée pour commander la LED bicolore (1) pour l'émission de lumière de la première ou de la seconde longueur d'onde λ₁, λ₂ , saisir un signal de photocapteur du photocapteur (2), déterminer une première et une seconde intensité de rayonnement diffus I_{λ1}, I_{λ2} attribuée à la première et à la seconde longueur d'onde λ₁, λ₂ sur la base du signal de photocapteur et prendre en compte les première et seconde intensités de rayonnement diffus I_{λ1}, I_{λ2} lors de l'alarme incendie (AL), **caractérisé en ce que** le détecteur de fumée à lumière diffusée présente un polarisateur sélectif en longueur d'onde (Pλ) qui est optiquement connecté en amont du photocapteur (2) ou en aval de la LED bicolore (1), dans lequel le polarisateur sélectif en longueur d'onde (Pλ) présente des propriétés optiques de sorte que la lumière qui traverse le polarisateur sélectif en longueur d'onde (Pλ) soit différemment polarisée en fonction de sa longueur d'onde λ₁, λ₂.

2. Détecteur de fumée à lumière diffusée selon la revendication 1, dans lequel le polarisateur (Pλ) présente des propriétés optiques de sorte que la lumière de la première longueur d'onde λ₁ qui traverse le polarisateur (Pλ) soit au moins partiellement polarisée, tandis que la lumière traversante de la seconde longueur d'onde λ₂ soit pour l'essentiel non polarisée.

3. Détecteur de fumée à lumière diffusée selon la revendication 2, dans lequel le polarisateur (Pλ) présente des propriétés optiques de sorte que la lumière de la seconde longueur d'onde λ₂ qui traverse le polarisateur (Pλ) présente un degré de polarisation de 0,05 maximum.

4. Détecteur de fumée à lumière diffusée selon la revendication 2 ou 3, dans lequel le polarisateur (Pλ) comprend un plan de polarisation ainsi que des propriétés optiques de sorte qu'une part d'au moins 50 %, en particulier d'au moins 80 % de la lumière polarisée de la première longueur d'onde λ₁ traverse le polarisateur (Pλ) parallèlement au plan de polarisation du polarisateur (Pλ), tandis qu'une part maximale de 5 %, en particulier de 1 % maximum de la lumière polarisée de la première longueur d'onde λ₁ traverse le polarisateur (Pλ) verticalement par rapport au plan de polarisation du polarisateur (Pλ).

5. Détecteur de fumée à lumière diffusée selon l'une des revendications précédentes, dans lequel le polarisateur (Pλ) est un polarisateur linéaire sélectif en longueur d'onde et dans lequel le polarisateur (Pλ) est un polarisateur constitué d'un film polymère, en particulier d'un film en alcool polyvinylique avec iode introduite par diffusion, un polarisateur à grille métallique ou un polarisateur de type colorant.

6. Détecteur de fumée à lumière diffusée selon l'une des revendications 1 à 5, dans lequel la LED bicolore (1) est disposée sous un premier angle de diffusion (α1) de 45° à 135°, en particulier de 60° à 120° et de préférence de 90° ±5° par rapport au photocapteur (2), dans lequel la LED bicolore (1) et le photocapteur (2) sont alignés sur un volume commun de lumière diffusée (SV), dans lequel le polarisateur (PÀs) est un polarisateur linéaire, dans lequel le polarisateur (Pλs) est optiquement connecté en amont du photocapteur (2) ou en aval de la LED bicolore (1), et dans lequel le polarisateur (Pλs) est configuré de telle sorte que son plan de polarisation inclut un angle de 90°±5° avec un plan formé par les axes optiques (SA, EA) de la LED bicolore (1) et du photocapteur (2).

7. Détecteur de fumée à lumière diffusée selon la revendication 6, dans lequel l'unité de commande (3) est configurée pour
- déterminer un premier quotient Q1s à partir des deux intensités de rayonnement diffus I_{λ1}, I_{λ2},
- émettre une alarme incendie (AL) ou une alarme de feu couvant (AL-SB) si le premier quotient Q1s se situe dans une première ou une deuxième plage de quotient (F_{TF2}, F_{TF3}),
- émettre une alarme incendie (AL) ou une alarme incendie pour feu ouvert (AL-OF) si le premier quotient Q1s se situe dans une troisième plage de quotient (F_{OF}).

8. Détecteur de fumée à lumière diffusée selon la revendication 6 ou 7, dans lequel l'unité de commande (3) est configurée pour
- déterminer un premier quotient Q1s à partir des deux intensités de rayonnement diffus I_{λ1}, I_{λ2},
- empêcher l'émission d'une alarme incendie (AL) et/ou émettre un message d'alerte (W-H2O) pour la vapeur d'eau ou le brouillard détecté dans le volume de lumière diffusée (SV) si le premier quotient Q1s se situe dans une quatrième plage de quotient (F_{H2O}).

9. Détecteur de fumée à lumière diffusée selon la revendication 7 ou 8, dans lequel ce qui suit s'applique pour une plage de valeurs des plages de quotient (F_{H2O}, F_{TF2}, F_{TF3}, F_{OF}) :
Valeurs de quotient de la quatrième plage de quotient (F_{H2O})<
Valeurs de quotient de la première plage de quotient (F_{TF2})<
Valeurs de quotient de la deuxième plage de quotient (F_{TF3})<
Valeurs de quotient de la troisième plage de quotient (F_{OF}).

10. Détecteur de fumée à lumière diffusée selon l'une des revendications 1 à 5, dans lequel le détecteur de fumée à lumière diffusée présente un premier et un second photocapteur (21, 22) à la place d'un photocapteur (2), dans lequel la LED bicolore (1) est disposée sous un premier angle de diffusion (α1) de 45° à 135°, en particulier de 60° à 120° et de préférence de 90° ±5° par rapport au premier photocapteur (21), dans lequel la LED bicolore (1) est disposée sous un second angle de diffusion (α2) de 142° ±5°, de préférence de 142° ±1° par rapport au second photocapteur (22), dans lequel la LED bicolore (1) et les deux photocapteurs (21, 22) sont alignés sur un volume commun de lumière diffusée (SV), dans lequel un polarisateur (Pλp) est connecté en aval de la LED bicolore (1) et polarise différemment la lumière traversante émise par la LED bicolore (1) en fonction de sa longueur d'onde λ₁, λ₂, dans lequel l'unité de commande (3) est connectée à la LED bicolore (1) et aux deux photocapteurs (21, 22) et est configurée pour commander la LED bicolore (1) afin qu'elle émette la lumière de la première ou de la seconde longueur d'onde λ₁, λ₂, saisir un signal de photocapteur de chacun des deux photocapteurs (21, 22), déterminer une première et une seconde intensité de rayonnement diffus I_{λ11}, I_{λ12} ; l_{λ21}, I_{λ22} pour la première et la seconde longueur d'onde λ₁, λ₂ sur la base du signal de photocapteur correspondant et prendre en compte les première et seconde intensités de rayonnement diffus l_{λ11}, I_{λ12} ; l_{λ21}, I_{λ22} lors de l'alarme incendie (AL) .

11. Détecteur de fumée à lumière diffusée selon l'une des revendications 1 à 5, dans lequel le détecteur de fumée à lumière diffusée présente une première et une seconde LED bicolore (11, 12) à la place d'une LED bicolore (1), dans lequel le photocapteur (2) est disposé sous un premier angle de diffusion (α1) dans la plage de 45° à 135°, en particulier de 60° à 120° et de préférence de 90° ±5° par rapport à la première LED bicolore (11), dans lequel le photocapteur (2) est disposé sous un second angle de diffusion (α2) de 142° ± 5°, de préférence de 142° ±1° par rapport à la seconde LED bicolore (12), dans lequel le photocapteur (2) et les deux LED bicolores (11, 12) sont alignés sur un volume commun de lumière diffusée (SV), dans lequel un polarisateur (Pλp) qui polarise différemment la lumière traversante en fonction de sa longueur d'onde λ₁, λ₂ est optiquement connecté en amont du photocapteur (2), dans lequel l'unité de commande (3) est connectée au photocapteur (2) et aux deux LED bicolores (11, 12) et est configurée pour commander les deux LED bicolores (11, 12) afin qu'elles émettent la lumière de la première ou de la seconde longueur d'onde λ₁, λ₂, saisir un signal de photocapteur du photocapteur (2), déterminer une première et une seconde intensité de rayonnement diffus I_{λ11}, I_{λ12} ; I_{λ21}, I_{λ22} pour la première et la seconde longueur d'onde λ₁, λ₂ sur la base des LED bicolores commandées (11, 12) et prendre en compte les première et seconde intensités de rayonnement diffus I_{λ11}, I_{λ12} ; I_{λ21}, I_{λ22} lors de l'alarme incendie (AL) .

12. Détecteur de fumée à lumière diffusée selon la revendication 10 ou 11, dans lequel le polarisateur (Pλp) est un polarisateur linéaire et est configuré de telle sorte que son plan de polarisation inclut un angle de 0° ±5° avec un plan formé par l'axe optique (SA, EA) de la LED bicolore (1) ou du photocapteur (2) .

13. Détecteur de fumée à lumière diffusée selon l'une des revendications 10, 11 ou 12, dans lequel l'unité de commande (3) est configurée pour
- déterminer un deuxième quotient Q2p à partir de la première et de la seconde intensité de rayonnement diffus I_{λ11}, I_{λ12} attribuées au premier angle de diffusion (α1),
- déterminer un troisième quotient Q3p à partir de la première et de la seconde intensité de rayonnement diffus I_{λ11}, I_{λ12} attribuées au second angle de diffusion (α2),
- émettre une alarme incendie (AL) et/ou une alarme de feu couvant (AL-SB) si le deuxième quotient Q2p se situe dans l'autre deuxième plage de quotient, ou
- émettre une alarme incendie (AL) si le troisième quotient Q3p se situe dans l'autre deuxième plage de quotient et,
- empêcher l'émission d'une alarme incendie (AL) et/ou émettre un message d'alerte (W-H2O) pour la vapeur d'eau ou le brouillard détecté dans le volume de lumière diffusée (SV) si le deuxième quotient Q2p se situe dans l'autre première plage de quotient et/ou si le troisième quotient Q3p se situe dans l'autre première plage de quotient.

14. Détecteur de fumée à lumière diffusée selon la revendication 6, dans lequel l'unité de commande (3) est configurée pour normaliser la première et la seconde intensité de rayonnement diffus I_{λ11}, I_{λ12} attribuées au premier angle de diffusion (α1) de sorte que le premier quotient Q1s et/ou le deuxième quotient Q2p présentent une valeur de quotient dans la plage de 1 à 3, en particulier une valeur de quotient de 2, pour les particules diffusées intégrées dans le volume de lumière diffusée (SV) avec un diamètre moyen prédéfini dans la plage de 0,5 à 1,5 µm, et/ou dans lequel l'unité de commande (3) est configurée pour normaliser la première et la seconde intensité de rayonnement diffus I_{λ21}, I_{λ22} attribuées au second angle de diffusion (α2) de sorte que le troisième quotient Q3p présente une valeur de quotient dans la plage de 1 à 3, en particulier une valeur de quotient de 2, pour les particules diffusées intégrées dans le volume de lumière diffusée (SV) avec un diamètre moyen prédéfini dans la plage de 0,5 à 1,5 µm.

15. Utilisation d'un polarisateur sélectif en longueur d'onde (Pλ) lors de la détection de fumée optique par lumière diffusée selon le principe bicolore avec une LED bicolore (1) et un photocapteur (2) spectralement adapté à celle-ci, qui forment un agencement de lumière diffusée, dans laquelle le polarisateur sélectif en longueur d'onde est optiquement connecté en amont du photocapteur(2) ou en aval de la LED bicolore (2) de sorte qu'en cas de détection de fumée, une lumière monochrome d'une première longueur d'onde λ₁ émise par la LED bicolore et une lumière monochrome émise d'une seconde longueur d'onde λ₂ soient différemment polarisées au moyen du polarisateur sélectif en longueur d'onde (Pλ).
